# EUROPÄISCHE PATENTANMELDUNG

(11) **EP 4 527 532 A1**
(43) Veröffentlichungstag der Anmeldung: **26.03.2025**
(21) Anmeldenummer: 24193752.3
(22) Anmeldetag: 09.08.2024
(51) Int. Cl.: B23D 35/00

(54) **BOGENFÖRMIGES SCHNEIDWERKZEUGTEIL, SCHNEIDWERKZEUG UND BEARBEITUNGSVORRICHTUNG**

(30) Priorität: 16.08.2023 DE 102023121959
(71) Anmelder: EVOBEND GmbH, 83404 Ainring (DE)
(72) Erfinder: Duscher, Nikolaus Franz, 5101 Bergheim bei Salzburg (AT)
(74) Vertreter: Thum, Bernhard

(57) **Zusammenfassung**

Die vorliegende Erfindung betrifft ein bogenförmiges Schneidwerkzeugteil (306; 306') für eine Bearbeitungsvorrichtung (10) zum Schneiden von Flachmaterial (FM), wie beispielsweise Blech, umfassend:
einen radial außenliegenden Schneidenbereich (308) mit zumindest einer ersten bogenförmigen Schneide (310);
eine Anbringanordnung (344) zum Anbringen an der Bearbeitungsvorrichtung (10); und
eine erste Kopplungsanordnung (320) mit einem ersten Kopplungsabschnitt (322) und eine zweite Kopplungsanordnung (324) mit einem zweiten Kopplungsabschnitt (326);
wobei das bogenförmige Schneidwerkzeugteil (306; 306') eine Umfangsrichtung (U) gemäß der Bogenform definiert;
wobei die erste und/oder die zweite Kopplungsanordnung (320, 324) zum lösbaren Koppeln in der Umfangsrichtung (U) mit zumindest einem weiteren, bogenförmigen Schneidwerkzeugteil (306; 306') ausgebildet ist.

## Beschreibung

Die vorliegende Erfindung betrifft ein bogenförmiges Schneidwerkzeugteil für eine Bearbeitungsvorrichtung zum Schneiden von Flachmaterial, ein Schneidwerkzeug mit zumindest einem solchen Schneidwerkzeugteil, und eine Bearbeitungsvorrichtung mit zumindest einem solchen bogenförmigen Schneidwerkzeugteil.

Als technischer Hintergrund betrifft die vorliegende Erfindung eine Bearbeitungsvorrichtung zum Schneiden von Flachmaterial, wie beispielsweise Blech, umfassend:
- eine Basis mit einem Auflagertisch für das Flachmaterial, wobei die Basis eine Vorschubrichtung definiert, in der das Flachmaterial der Bearbeitungsvorrichtung zuführbar ist,
- eine erste Schneidvorrichtung, die dazu ausgebildet ist, das Flachmaterial quer zur Vorschubrichtung zu schneiden, und
- eine zweite Schneidvorrichtung, die dazu ausgebildet ist, das Flachmaterial in Vorschubrichtung zu schneiden.

Derartige Bearbeitungsvorrichtungen sind aus dem Stand der Technik der Blechbearbeitung bekannt. So ist es allgemein üblich, Flachmaterial, wie beispielsweise Blech, derartigen Bearbeitungsvorrichtungen zuzuführen, um diese in Längsrichtung und in Querrichtung zu schneiden.

Gerade bei Schneidvorrichtungen, die dazu vorgesehen sind, das Flachmaterial in Vorschubrichtung zu schneiden, wird häufig ein sogenanntes Schneidrad vorgesehen. Üblicherweise ist ein solches Schneidrad auf einem Träger der Bearbeitungsvorrichtung angeordnet. Mit voranschreitender Nutzung kann es zu Verschleiß an dem Schneidrad kommen. Dann muss das Schneidrad ausgetauscht werden, wobei dazu in der Regeln ein Ausbau des verschlissenen Schneidrads aus und ein Einbau eines neuen Schneidrads in die Bearbeitungsvorrichtung notwendig ist. Bei bekannten Bearbeitungsvorrichtungen gestaltet sich ein solcher Austausch relativ komplex und zeitaufwendig. Typischerweise müssen viele Arbeitsschritte ausgeführt werden. Dies ist unter anderem darauf zurückzuführen, dass zunächst auch der Träger des Schneidrads ausgebaut werden muss, um dann das verschlissenen Schneidrad von dem Träger zu entfernen und anschließend das neue Schneidrad auf den Träger zu montieren. Anschließend muss der Träger wieder in die Bearbeitungsvorrichtung eingebaut werden.

Es ist somit eine Aufgabe der vorliegenden Erfindung, für Bearbeitungsvorrichtungen der eingangs genannten Art eine verbesserte Instandhaltbarkeit und Austauschbarkeit der Schneidvorrichtung bzw. der Schneidvorrichtungen zu ermöglichen.

Es ist ferner eine Aufgabe der vorliegenden Erfindung, ein verbessertes Schneidwerkzeug zum Schneiden von Flachmaterial bereitzustellen.

Es ist außerdem eine Aufgabe der vorliegenden Erfindung, eine Bearbeitungsvorrichtung der eingangs genannten Art mit verbesserter Instandhaltbarkeit bereitzustellen.

Zumindest eine der vorangehend genannten Aufgaben wird durch das erfindungsgemäße bogenförmige Schneidwerkzeugteil für eine Bearbeitungsvorrichtung zum Schneiden von Flachmaterial, wie beispielsweise Blech, gelöst. Das Schneidwerkzeugteil umfasst:
einen radial außenliegenden Schneidenbereich mit zumindest einer ersten bogenförmigen Schneide;
eine Anbringanordnung zum Anbringen an der Bearbeitungsvorrichtung; und
eine erste Kopplungsanordnung mit einem ersten Kopplungsabschnitt und eine zweite Kopplungsanordnung mit einem zweiten Kopplungsabschnitt;
wobei das bogenförmige Schneidwerkzeugteil eine Umfangsrichtung gemäß der Bogenform definiert;
wobei die erste und/oder die zweite Kopplungsanordnung zum lösbaren Koppeln in der Umfangsrichtung mit zumindest einem weiteren, bogenförmigen Schneidwerkzeugteil ausgebildet ist.

Durch das erfindungsgemäße Schneidwerkzeugteil wird ein einfaches Koppeln mit und Entkoppeln von dem weiteren, bogenförmigen Schneidwerkzeugteil ermöglicht. Ferner wird ermöglicht, ein Schneidwerkzeug aus zumindest zwei Schneidwerkzeugteilen zu bilden. Die Erfinder haben erkannt, dass es dafür besonders vorteilhaft ist, das Schneidwerkzeug in Umfangsrichtung in zumindest zwei Schneidwerkzeugteile zu unterteilen. Dabei kann das weitere Schneidwerkzeugteil baugleich zu dem erfindungsgemäßen Schneidwerkzeugteil ausgebildet sein.

Gemäß einer Weiterbildung der Erfindung kann vorgesehen sein, dass die erste und die zweite Kopplungsanordnung derart ausgebildet sind, dass ein imaginäres Koppeln mit der jeweils anderen von der ersten und zweiten Kopplungsanordnung bereitgestellt ist. Unter einem solchen Koppeln kann verstanden werden, dass ein imaginäres flächiges und/oder zumindest teilweise formschlüssiges Anliegen der Kopplungsanordnungen aneinander vorgesehen sein kann. Dies kann auf die geometrischen Formen der Kopplungsanordnungen zurückzuführen sein. Es versteht sich, dass ein solches imaginäres Koppeln ohne ein zwischen den Kopplungsanordnungen angeordnetes zusätzliches Bauteil vorgesehen sein kann. Eine Kopplung kann die relative Bewegung in zumindest einer Raumrichtung sperren. Bevorzugt wird die Bewegung in allen Raumrichtungen gesperrt.

Gemäß einer Weiterbildung der Erfindung kann vorgesehen sein, dass die erste und die zweite Kopplungsanordnung im Wesentlichen gleich ausgebildet sind. Dadurch ist das Schneidwerkzeugteil besonders kompatibel zum Koppeln mit dem weiteren Schneidwerkzeugteil.

Gemäß einer alternativen Ausgestaltung der Erfindung kann vorgesehen sein, dass die erste und die zweite Kopplungsanordnung zueinander zumindest teilweise und/oder abschnittsweise unterschiedlich ausgebildet sind. Damit kann ein besonders definiertes Koppeln mit dem weiteren Schneidwerkzeugteil bereitgestellt werden.

Gemäß einer weiteren Ausgestaltung der Erfindung kann vorgesehen sein, dass der erste und der zweite Kopplungsabschnitt zueinander zumindest teilweise, bevorzugt überwiegend, besonders bevorzugt vollständig zueinander komplementär ausgebildet sind. Damit kann ein besonders definiertes Koppeln bereitgestellt werden. Diese ist insbesondere dann vorteilhaft, wenn ein Koppeln mit einem baugleichen weiteren Schneidwerkzeugteil vorgesehen ist. Eine besonders vorteilhafte Ausgestaltung der komplementären Ausbildung der Kopplungsabschnitte liegt darin, ein formschlüssiges Koppeln der Kopplungsabschnitte bereitzustellen.

Gemäß einer Ausführungsform der Erfindung kann vorgesehen sein, dass der erste und/oder der zweite Kopplungsabschnitt eine geometrische Form umfasst, die ein formschlüssiges Koppeln mit dem anderen von dem erstem und zweiten Kopplungsabschnitt ermöglicht.

Gemäß einer Ausgestaltung der Erfindung kann vorgesehen sein, dass zumindest eine der Kopplungsanordnungen zumindest eine Aussparung zur Aufnahme eines Verbindungsmittels, insbesondere einer Schraube, aufweist. Dadurch kann ein besonders einfaches und effektives lösbares Koppeln mit dem weiteren bogenförmigen Schneidwerkzeugteil bereitgestellt werden. Bevorzugt weist die erste und die zweite Kopplungsanordnung zumindest eine solche Aussparung auf. Die Aussparung kann sich zumindest teilweise entlang der Umfangsrichtung erstrecken. Es kann vorgesehen sein, dass die zumindest eine Aussparung eine Mittelachse aufweist, die senkrecht zu einer Fläche des Kopplungsabschnitts der Kopplungsanordnung ausgerichtet ist.

Gemäß einer Weiterbildung der Erfindung kann vorgesehen sein, dass die Aussparung von zumindest einem von der ersten und der zweiten Kopplungsanordnung als Gewindeloch mit einem innenliegenden Gewinde ausgebildet ist.

Gemäß einer Weiterbildung der Erfindung kann ferner vorgesehen sein, dass die Aussparung von dem anderen von der ersten und der zweiten Kopplungsanordnung zur Aufnahme eines Schraubenkopfes ausgebildet ist.

Gemäß einer Ausgestaltung der Erfindung umfasst das Schneidwerkzeugteil ferner einen radial innenliegenden, insbesondere bogenförmigen, Abschnitt. Dieser kann zum zumindest teilweisen Umgreifen eines Teils der Bearbeitungsvorrichtung, insbesondere eines Führungszylinder der Bearbeitungsvorrichtung, vorgesehen sein. Die Anbringanordnung kann als der bogenförmige Abschnitt ausgebildet sein und demnach zum Anbringen an der Bearbeitungsvorrichtung dienen.

Gemäß einer weiteren Ausgestaltung der Erfindung kann vorgesehen sein, dass der innenliegende Abschnitt ferner zum Anliegen an dem Führungszylinder der Bearbeitungsvorrichtung vorgesehen ist. Dadurch kann eine besonders definierte Führung des Schneidwerkzeugteils relativ zu der Bearbeitungsvorrichtung bereitgestellt werden.

Gemäß einer Weiterbildung der Erfindung kann vorgesehen sein, dass der radial außenliegende Schneidenbereich, insbesondere zumindest die erste Schneide, und/oder der innenliegende Abschnitt gemäß einer Kreissegmentform gebildet ist. Dabei kann ferner vorgesehen sein, dass der radial außenliegende Schneidenbereich, insbesondere zumindest die erste Schneide, und/oder der innenliegende Abschnitt einen Winkel der Kreissegmentform von im Wesentlichen 180° abbildet. Auch andere Winkel, beispielsweise 90° oder 45°, wie auch weitere ganzzahlige Teiler von 360°, können vorgesehen sein.

Gemäß einer Ausgestaltung der Erfindung kann vorgesehen sein, dass das Schneidwerkzeugteil ringsegmentförmig, insbesondere kreisringsegmentförmig, ausgebildet ist. Die Ringsegmentform kann dabei in radialer Richtung eine konstante Dicke aufweisen.

Gemäß einer weiteren Ausgestaltung der Erfindung kann vorgesehen sein, dass die Bogenform des Schneidwerkzeugteils einen Winkel von im Wesentlichen 180° abbildet. Auch andere Winkel, beispielsweise 90° oder 45°, wie auch weitere ganzzahlige Teiler von 360°, können vorgesehen sein.

Gemäß einer Weiterbildung der Erfindung kann vorgesehen sein, dass die Anbringanordnung zumindest ein Befestigungsloch, bevorzugt mehrere Befestigungslöcher, besonders bevorzugt mehrere entlang eines Lochkreises angeordnete Befestigungslöcher, zur zumindest teilweisen Aufnahme eines jeweiligen Verbindungsmittels, insbesondere jeweiliger Schrauben, aufweisen. Bevorzugt ist das zumindest eine Befestigungsloch in einer Richtung senkrecht zur radialen Richtung und/oder Umfangsrichtung ausgerichtet.

Gemäß einer Ausgestaltung der Erfindung kann vorgesehen sein, dass die Bearbeitungsvorrichtung zur Anbringung des Schneidwerkzeugteils an der Bearbeitungsvorrichtung einen Schneidwerkzeugteilträger aufweist. Die Anbringanordnung kann ferner einen Kontaktabschnitt zum Kontaktieren, insbesondere zum flächigen Kontaktieren, des Schneidwerkzeugteilträgers aufweisen.

Zumindest eine der eingangs genannten Aufgaben wird ferner durch ein bogenförmiges Schneidwerkzeug gelöst, umfassend,
ein erstes Schneidwerkzeugteil gemäß einer der vorangehend genannten Arten; und
ein zweites Schneidwerkzeugteil gemäß einer der vorangehend genannten Arten;
wobei die erste Kopplungsanordnung des zweiten Schneidwerkzeugteils mit der ersten oder der zweiten Kopplungsanordnung des ersten Schneidwerkzeugteils gekoppelt ist.

Gemäß einer Ausgestaltung des erfindungsgemäßen Schneidwerkzeugs kann vorgesehen sein, dass die zweite Kopplungsanordnung des zweiten Schneidwerkzeugteils mit der anderen von der ersten und der zweiten Kopplungsanordnung des ersten Schneidwerkzeugteils gekoppelt ist.

Gemäß einer Ausgestaltung kann das Schneidwerkzeugs ferner zumindest ein, bevorzugt zumindest zwei, Verbindungsmittel zum lösbaren Koppeln des ersten Schneidwerkzeugteils mit dem zweiten Schneidwerkzeugteil umfassen.

Gemäß einer Ausgestaltung des erfindungsgemäßen Schneidwerkzeugs kann vorgesehen sein, dass die Schneidwerkzeugteile gleichartig, insbesondere identisch, ausgebildet sind.

Zumindest eine der eingangs genannten Aufgaben wird ferner durch eine Bearbeitungsvorrichtung zum Schneiden von Flachmaterial, wie beispielsweise Blech, gelöst, umfassend:
- eine Basis mit einem Auflagertisch für das Flachmaterial, wobei die Basis eine Vorschubrichtung definiert, in der das Flachmaterial der Bearbeitungsvorrichtung zuführbar ist, und
- eine Schneidvorrichtungsanordnung, die dazu ausgebildet ist, das Flachmaterial zu schneiden,
wobei die Schneidvorrichtungsanordnung zumindest ein Schneidwerkzeugteil gemäß einer der vorangehend genannten Arten und/oder ein Schneidwerkzeug gemäß einer der vorangehend genannten Arten zum Schneiden des Flachmaterials aufweist.

Gemäß einer Ausgestaltung des erfindungsgemäßen Bearbeitungsvorrichtung kann ferner vorgesehen sein, dass die Schneidvorrichtungsanordnung
- eine erste Schneidvorrichtung umfasst, die dazu ausgebildet ist, das Flachmaterial quer zur Vorschubrichtung zu schneiden, und/oder
- eine zweite Schneidvorrichtung umfasst, die dazu ausgebildet ist, das Flachmaterial in Vorschubrichtung zu schneiden,
wobei die erste Schneidvorrichtung oder die zweite Schneidvorrichtung das Schneidwerkzeugteil und/oder das Schneidwerkzeug umfasst.

Gemäß einer Ausgestaltung des erfindungsgemäßen Bearbeitungsvorrichtung kann ferner vorgesehen sein, dass die Bearbeitungsvorrichtung ferner eine Trennbearbeitungseinheit aufweist, die in der Bearbeitungsvorrichtung relativ zur Basis quer zur Vorschubrichtung verlagerbar ausgebildet ist, wobei die Trennbearbeitungseinheit dazu ausgebildet ist, das Flachmaterial abschnittsweise einer Trennbearbeitung zu unterziehen.

Gemäß einer Weiterbildung der Erfindung weist die Bearbeitungsvorrichtung der vorangehend genannten Art ferner eine Trennbearbeitungseinheit auf, die in der Bearbeitungsvorrichtung relativ zur Basis quer zur Vorschubrichtung verlagerbar ausgebildet ist, wobei die Trennbearbeitungseinheit dazu ausgebildet ist, das Flachmaterial abschnittsweise einer Trennbearbeitung bzw. Stanzbearbeitung zu unterziehen.

Diese Weiterbildung sieht also vor, in einer einzigen Bearbeitungsvorrichtung, d. h. in einer einzigen Maschine, die Bearbeitungsschritte des Querschneidens und Längsschneidens mit der lokalen Trennbearbeitung, beispielsweise in Form von Stanzen über die Bereitstellung der Trennbearbeitungseinheit zu kombinieren. Zusätzlich zu den beiden Schneidvorrichtungen wird also die Stanzeinheit in der Maschine vorgesehen, mit der eine lokale Stanz- und Trennbearbeitung am Flachmaterial in ein und derselben Maschine vorgenommen werden kann. Die Weiterbildung erzielt also eine kompakte Maschine zum Ausführen sämtlicher Trennbearbeitungsschritte, die bei der Bearbeitung von Flachmaterial, insbesondere von Blech, in der Regel durchgeführt werden müssen.

Wenn im Zusammenhang mit der vorliegenden Offenbarung von einem Auflagertisch die Rede ist, dann bedeutet dies nicht zwingend, dass es sich um einen Tisch mit einer planar ausgedehnten Tischplatte handelt. Vielmehr bedeutet dies, dass das Flachmaterial über ein ausgedehntes Auflager in die Bearbeitungsvorrichtung eingeführt und den weiteren Komponenten derselben zugeführt werden kann. Dieses Auflager bzw. der Auflagertisch kann beispielsweise durch eine Vielzahl von Rollen oder Rollenbahnen gebildet sein. Dabei kann vorgesehen sein, dass der Auflagertisch Führungselemente zum Ausrichten des Längsmaterials aufweist. Darüber hinaus kann der Auflagertisch auch Formrollen aufweisen, um das Flachmaterial zu richten, d. h. um dieses zu glätten, sofern es Deformationen aufweist, wie beispielsweise Unebenheiten, lokale Ausbeulungen, Krümmungen etc.

Eine Weiterbildung der Erfindung sieht vor, dass an der Basis ein Führungsportal vorgesehen ist, das quer zum Auflagertisch angeordnet ist, wobei das Führungsportal eine Führungsvorrichtung aufweist, mit der die Trennbearbeitungseinheit relativ zur Basis geführt verlagerbar ist. Die Trennbearbeitungseinheit ist also an dem Führungsportal entlang der Führungsvorrichtung verlagerbar und kann so jede beliebige Stelle des Flachmaterials bearbeiten, wenn dieses durch die Maschine durchgeführt wird. Dabei ist bevorzugt vorgesehen, dass die Führungsvorrichtung eine Linearführung aufweist.

In einer Ausführungsvariante der Erfindung kann vorgesehen sein, dass das Flachmaterial auf dem Auflagertisch relativ zur Basis in Vorschubrichtung mittels einer Vorschubvorrichtung verlagerbar ist. Diese Verlagerung kann über eine Verlagerungsvorrichtung, beispielsweise über angetriebene Vorschubrollen oder dergleichen erfolgen. Ferner kann das Flachmaterial in einer bestimmten gewünschten Stellung angehalten und fixiert werden. Dabei kann vorgesehen sein, dass die Basis eine Fixiervorrichtung zum temporären Fixieren des Flachmaterials auf dem Auflagertisch aufweist.

Gemäß einer Ausführungsvariante der Erfindung kann vorgesehen sein, dass das Führungsportal relativ zur Basis in Vorschubrichtung verlagerbar ausgebildet ist. Mit anderen Worten kann das Führungsportal selbst relativ zur Basis verlagerbar sein, beispielsweise derart, dass es sich innerhalb eines bestimmten Verlagerungsbereichs zusammen mit dem Flachmaterial in Vorschubrichtung relativ zur Basis bewegen lässt. Es kann aber auch möglich sein, das Flachmaterial vorübergehend anzuhalten und das Führungsportal relativ zum Flachmaterial parallel zur vorgesehenen Vorschubrichtung zu bewegen, um bestimmte Bearbeitungsschritte durchzuführen. Dadurch lässt sich beispielsweise ein beliebig konturierter Schnitt im Flachmaterial erzielen. Ferner kann das Führungsportal quer zur Vorschubrichtung relativ zur Basis verlagerbar sein.

Gemäß einer Ausführungsvariante der Erfindung ist vorgesehen, dass die erste Schneidvorrichtung eine Schlagscherenvorrichtung oder eine Rollenscherenvorrichtung aufweist. Üblicherweise werden derartige Schneidvorrichtungen zum Schneiden in Querrichtung Flachmaterials, also quer zur Vorschubrichtung eingesetzt. Ferner kann vorgesehen sein, dass die zweite Schneidvorrichtung eine Rundmesservorrichtung oder eine Rollenscherenvorrichtung aufweist. Derartige Schneidvorrichtungen werden in der Regel zum Schneiden in Längsrichtung des Flachmaterials, also parallel zur Vorschubrichtung eingesetzt.

Wie eingangs bereits erläutert, gibt es verschiedene Möglichkeiten die Trennbearbeitungseinheit auszugestalten. Wichtig ist, dass die Trennbearbeitungseinheit dazu geeignet ist, lokale Trennbearbeitungsvorgänge im Flachmaterial auszuführen, d. h. lokal bestimmte Ausnehmungen im Flachmaterial vorzunehmen oder das Flachmaterial entlang einer vorbestimmt profilierten Linie zu trennen. In diesem Zusammenhang kann vorgesehen sein, dass die Trennbearbeitungseinheit mit einer Laserbearbeitungseinheit oder/und mit einer Stanzeinheit ausgebildet ist. Ferner kann die Trennbearbeitungseinheit als Wasserschneid-Bearbeitungskopf ausgestaltet sein. Im Falle einer Ausführung als Laserbearbeitungseinheit kann die Trennbearbeitungseinheit eine Laseroptik aufweisen, die einen auf das Flachmaterial fokussierbaren Laserstrahl bereitstellt. Bei einer Ausgestaltung der Trennbearbeitungseinheit in Form einer Stanzeinheit ist diese mit wenigstens einem Stanzwerkzeug versehen.

In diesem Fall kann vorgesehen sein, dass die Stanzeinheit als hydraulische oder/und mechanische Stanzeinheit ausgebildet ist. Bei einer hydraulischen Stanzeinheit wird die Hubbewegung durch Ansteuerung einer Steuerhydraulik erzielt. Bei einer mechanische Stanzeinheit wird die Hubbewegung mechanisch, beispielsweise über einen Spindeltrieb erreicht. Ferner kann eine mechanische Stanzeinheit auch über einen Keilantrieb verfügen, d. h. die Hubbewegung kann durch Verlagerung verschiedener Keilflächen zueinander vollzogen werden.

Um die Stanzbearbeitung möglichst flexibel und multifunktional auszuführen, sieht eine Weiterbildung der Erfindung vor, dass die Stanzeinheit eine Mehrzahl von Stanzwerkzeugen aufweist, die wahlweise zum Bearbeiten des Flachmaterials auswählbar sind. So ist es möglich, eine Werkzeugaufnahme mit einer Mehrzahl von Stanzwerkzeugen auszuführen, wobei das jeweils gewünschte Stanzwerkzeug über einen gesonderten Hubkolben ansteuerbarer ist, der durch eine Verdrehung relativ zur Werkzeugaufnahme selektiv eines der darin aufgenommenen Stanzwerkzeuge ansteuern und für einen Stanzvorgang nutzen kann. Die weiteren Stanzwerkzeuge, die in der Werkzeugaufnahme vorgesehen sind, bleiben dabei passiv.

Erfindungsgemäß kann vorgesehen sein, dass die mechanische Stanzeinheit mit einer motorisch angetriebenen Doppel-Spindel-Anordnung mit gegenläufigen Spindeltrieben und einer Antriebssteuerung ausgebildet ist, wobei ein Kraftausgangselement wahlweise in einer senkrecht zur Vorschubrichtung, insbesondere senkrecht zu einer Haupterstreckungsrichtung des Flachmaterials, verlaufenden Hubrichtung verlagerbar oder/und relativ zu dieser verdrehbar ist. Bei einer derartigen Ausgestaltung lässt sich das Kraftausgangselement dazu verwenden, um eine Stanzeinheit mit einer Mehrzahl von Stanzwerkzeugen anzusteuern. Über die Wahl der Winkelstellung des Kraftausgangselements lässt sich der Hubkolben einer Werkzeugbaugruppe der Stanzeinheit mit der Mehrzahl von Stanzwerkzeugen verdrehen und so selektiv das jeweils gewünschte Stanzwerkzeug ansteuern.

Alternativ zu einer Doppel-Spindel-Anordnung mit gegenläufigen Spindeltrieben ist es ferner im Rahmen einer Ausführungsvariante der Erfindung möglich, die Stanzeinheit mit lediglich einer Spindel auszuführen, die wahlweise rechtslaufend oder linkslaufend ausgebildet sein kann und mit einer Wellenführung gekoppelt sein kann, die wahlweise verdrehsicher ausgeführt ist. Derartige Komponenten sind auch als Hub-Dreh-Module bekannt.

Die Offenbarung betrifft ferner eine Stanzeinheit zum Stanzbearbeiten eines Flachmaterials, insbesondere Bearbeitungskopf für eine Bearbeitungsvorrichtung der vorstehend beschriebenen Art, wobei der Bearbeitungskopf umfasst:
- ein Gehäuse, das eine Hubachse definiert;
- eine mechanische oder hydraulische Hubvorrichtung mit einem Kraftausgangselement;
- eine in dem Gehäuse um eine Drehachse drehbar gelagerte Werkzeugaufnahme zum Aufnehmen wenigstens eines Schneid- oder Stanzwerkzeugs;
- wenigstens ein in der Werkzeugaufnahme aufnehmbares und in Richtung der Hubachse entlang einer Werkzeuglängsachse verlagerbares Schneid- oder Stanzwerkzeug, wobei das Schneid- oder Stanzwerkzeug über das Kraftausgangselement entlang seiner Werkzeuglängsachse verlagerbar ist;
- eine Drehpositioniervorrichtung zum Drehpositionieren des wenigstens einen Schneid- oder Stanzwerkzeugs; und
- eine Matrizeneinheit, die zur Wechselwirkung mit dem wenigstens einen Schneid- oder Stanzwerkzeug ausgebildet und nach Maßgabe seiner Drehpositionierung ausrichtbar ist.

Eine derartige Stanzeinheit kann bei einer Bearbeitungsvorrichtung der vorangehend erläuterten Art vorgesehen sein. Eine solche Stanzeinheit erlaubt eine flexible Stanzbearbeitung von Flachmaterial. Die Bewegung wird über die mechanische oder hydraulische Hubvorrichtung ausgeführt. Die Werkzeugaufnahme lässt sich separat relativ zu Hubvorrichtung über die Drehpositioniervorrichtung verdrehen. Dadurch lässt sich das jeweils zur Schneid- bzw. Stanzbearbeitung ausgewählte Werkzeug in beliebiger Winkelstellung ausrichten. Ist eine Mehrzahl von Schneid- oder Stanzwerkzeugen vorgesehen, lassen sich diese ebenfalls separat ansteuern. Bekanntermaßen wird zum Erzielen eines qualitativ hochwertigen Bearbeitungsergebnises eine Matrizeneinheit vorgesehen, die das Schneid- oder Stanzwerkzeug während des Stanzvorgangs aufnimmt und führt.

Gemäß einer Weiterbildung der Stanzeinheit kann vorgesehen sein, dass die Drehpositioniervorrichtung dazu ausgebildet ist, das Schneid- oder Stanzwerkzeug um seine Werkzeuglängsachse und/oder um die Hubachse zu drehpositionieren.

Ferner kann bei der Stanzeinheit vorgesehen sein, dass die Hubvorrichtung mit einem Hydraulikkolben ausgebildet ist, der das Kraftausgangselement in Hubvorrichtung um wenigstens eine vorbestimmten Hubstrecke verlagert.

Eine vorteilhafte Ausführungsform der Stanzeinheit sieht vor, dass die Hubvorrichtung mit einer Spindelanordnung ausgebildet ist, insbesondere mit einer Doppelspindelanordnung, wobei die Doppelspindelanordnung mit einem ersten Spindeltrieb und einem zweiten Spindeltrieb versehen ist. Dabei kann der erste und der zweite Spindeltrieb einander gegenläufig ausgebildete Antriebsspindeln aufweisen, wobei bei gleichorientiertem Drehantreiben des ersten und des zweiten Spindeltriebs das Kraftausgangselement um die Hubachse drehpositionierbar ist, wobei bei gegenläufig orientiertem Drehantreiben des ersten und des zweiten Spindeltriebs das Kraftausgangselement entlang der Hubachse in Hubrichtung verlagerbar ist.

Bei dieser Ausführungsform der Stanzeinheit kann weiter vorgesehen sein, dass die Werkzeugaufnahme einen Revolver mit einer Mehrzahl von darin aufgenommenen Schneid- oder Stanzwerkzeugen aufweist, wobei jedes der Schneid- oder Stanzwerkzeuge wahlweise zur Bearbeitung des Flachmaterials aktivierbar ist. Ferner sieht eine Weiterbildung vor, dass das Kraftausgangselement ein relativ zur Hubachse exzentrisch angeordnetes und um die Hubachse wahlweise drehpositionierbares Koppelelement aufweist, wobei nach Maßgabe der Drehposition des Koppelelements um die Hubachse das jeweilige Schneid- oder Stanzwerkzeugs zur Bearbeitung des Flachmaterials aktivierbar ist, wobei nicht aktivierte Schneid- oder Stanzwerkzeuge passiv bleiben.

Darüber hinaus kann diese Ausführungsform vorsehen, dass der Werkzeugaufnahme ein mit dem Kraftausgangselement koppelbarer Hubkolben zugeordnet ist, mit dem das jeweils aktivierte Schneid- oder Stanzwerkzeug entlang seiner Werkzeuglängsachse in Hubrichtung verlagerbar ist.

Zur Positionierung des jeweiligen Stanzwerkzeugs in einer vorbestimmten Winkelstellung sieht eine Weiterbildung des Bearbeitungskopfes vor, dass der Werkzeugaufnahme ein Drehantrieb zugeordnet ist, mittels dem die Werkzeugaufnahme um die Hubachse relativ zu dem Gehäuse drehpositionierbar ist, wobei nach Maßgabe der Drehposition der Werkzeugaufnahme die Ausrichtung des wenigstens einen Schneid- oder Stanzwerkzeugs der Hubachse veränderbar ist.

Ferner sieht eine Weiterbildung der Stanzeinheit vor, dass der Matrizeneinheit ein Drehantrieb zugeordnet ist, mittels dem eine das jeweils aktivierte Schneid- oder Stanzwerkzeug aufnehmende zum aktivierten Schneid- oder Stanzwerkzeug komplementäre Matrize um die Hubachse relativ zu dem Gehäuse drehpositionierbar ist, wobei die Matrize nach Maßgabe der Ausrichtung und Positionierung aktivierten Schneid- oder Stanzwerkzeugs der Hubachse positionierbar ist.

Im folgenden wird die Erfindung anhand von Figuren beispielhaft erläutert. Es stellen dar:
- Fig. 1: eine räumliche Darstellung einer Bearbeitungsvorrichtung;
- Fig. 2: eine räumliche Schnittdarstellung entlang einer in Vorschubrichtung verlaufenden vertikalen Schnittebene der Bearbeitungsvorrichtung;
- Fig. 3: eine räumliche Darstellung eines erfindungsgemäßen bogenförmigen Schneidwerkzeugteils;
- Fig. 4: eine Schnittansicht des erfindungsgemäßen bogenförmigen Schneidwerkzeugteils;
- Fig. 5: eine Ansicht des erfindungsgemäßen bogenförmigen Schneidwerkzeugteils von unten;
- Fig. 6: eine Detailansicht des erfindungsgemäßen bogenförmigen Schneidwerkzeugteils;
- Fig. 7: eine Darstellung eines erfindungsgemäßen Schneidwerkzeugs;
- Fig. 8: eine Schnittansicht des erfindungsgemäßen bogenförmigen Schneidwerkzeugs;
- Fig. 9: eine Detailansicht der Bearbeitungsvorrichtung mit erfindungsgemäßem Schneidwerkzeug;
- Fig. 10: eine räumliche Darstellung eines oberen Teils einer Stanzeinheit gemäß einer Weiterbildung der Erfindung;
- Fig. 11: eine räumliche Darstellung des oberen Teils der Stanzeinheit, wobei ein Teil des Gehäuses weggelassen wurde, um die Doppelspindelanordnung erkennbar zu machen;
- Fig. 12: eine Schnittdarstellung entlang der Hubachse des oberen Teils der Stanzeinheit;
- Fig. 13: einen Ausschnitt der Bearbeitungsvorrichtung gemäß einer Weiterbildung, die einen der Stanzeinheit bezüglich der Vorschubrichtung vorgelagerten Einzug sowie eine Matrizenvorrichtung der Stanzeinheit in einem achsenthaltenden Schnitt zeigt;
- Fig. 14: eine räumliche Ansicht, die einen Ausschnitt aus Figur 12 zeigt, um das Zusammenspiel zwischen den einzelnen Komponenten der Stanzeinheit zu erläutern;
- Fig. 15: eine räumliche Teilschnittansicht zur Erläuterung der Werkzeugaufnahme;
- Fig. 16: eine Ansicht von unten der Stanzeinheit;
- Fig. 17: eine räumliche achsenthaltende Schnittansicht der Matrizenvorrichtung; und
- Fig. 18: eine weitere räumliche achsenthaltende Schnittansicht der Matrizenvorrichtung.

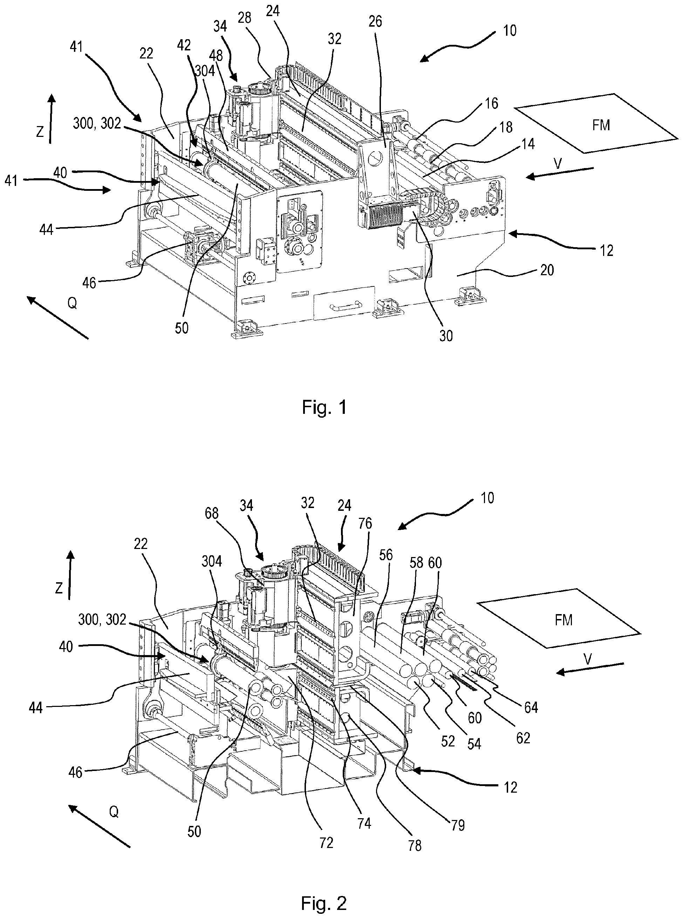

In Figur 1 ist eine erfindungsgemäße Bearbeitungsvorrichtung in räumlicher Darstellung gezeigt und allgemein mit 10 bezeichnet. Diese umfasst eine fest auf einem Untergrund anbringbare Basis 12 mit einem Auflagertisch 14, auf dem Flachmaterial FM aufgelegt und in einer Vorschubrichtung V verlagert werden kann. Zur Verlagerung dienen Antriebsrollen 16, 18, die angetrieben werden können und zwischen denen das Flachmaterial FM hindurchgeführt werden kann. Statt oder zusätzlich zu den Antriebsrollen 16 können auch manuell betätigbare Rollen vorgesehen sein. Bei dem Flachmaterial FM kann es sich beispielsweise um flächiges Material, insbesondere um Blechmaterial handeln. Die Basis 12 weist ferner zwei seitliche Wangen 20, 22 auf, an denen und zwischen denen der Auflagertisch 14 sowie die verschiedenen Antriebsrollen 16, 18 gelagert sind.

Ferner ist an den beiden seitlichen Wangen 20, 22 ein Führungsportal 24 angebracht, das sich quer zu dem Auflagertisch 14 oberhalb und unterhalb der Ebene erstreckt, entlang der das Flachmaterial FM geführt wird. Dieses Führungsportal 24 ist über seitliche Portalhalter 26, 28 entlang einer Linearführung 30 relativ zu der Basis 12 linear verlagerbar angebracht. Das Führungsportal 24 lässt sich also über die beiden Portalhalter 26, 28 relativ zur Basis 12 in einem bestimmten Umfang in der Vorschubrichtung V verlagern. An dem Führungsportal 24 ist in Querrichtung Q eine erste Linearführung 32 angebracht. Diese Linearführung 32 dient dazu, eine Stanzeinheit 34, die im Folgenden noch im Detail erläutert wird, relativ zum Führungsportal 24 in Querrichtung Q und damit quer zur Basis 12 zu verlagern. Ist von einer Bewegung in einer Richtung der Rede, beispielsweise eine Bewegung in Vorschubrichtung V oder in Querrichtung Q, so kann dies auch eine entsprechend entgegengesetzte Bewegung umfassen.

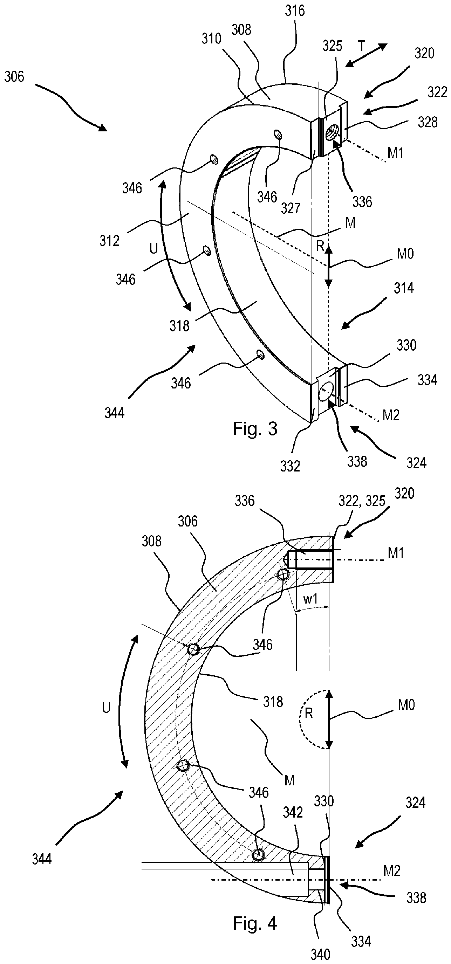

Ferner erkennt man in Figur 1 noch zwei Schneidvorrichtungen 40, 42 einer Schneidvorrichtungsanordnung 41. Eine erste Schneidvorrichtung 40 ist in Form einer Schlagscherenvorrichtung ausgebildet und dient dazu, das Flachmaterial in Querrichtung Q zu schneiden. Eine zweite Schneidvorrichtung 42 ist in Form einer Rollenscherenvorrichtung, insbesondere gemäß einem bogenförmigen Schneidwerkzeug 300, wie es noch im Zusammenhang mit Figuren 3 bis 8 näher erläutert werden wird, ausgebildet. Das bogenförmige Schneidwerkzeug 300 dient dazu, das Flachmaterial FM in Längsrichtung, d. h. in Vorschubrichtung V zu schneiden.

Die erste Schneidvorrichtung 40 ist ortsfest angebracht, wobei ein Messer 44 in Höhenrichtung Z über eine Linearführung verlagerbar ist. Hierfür ist ein Exzentertrieb 46 vorgesehen. Bei der zweiten Schneidvorrichtung 42 ist ein Rollenmesser 48, nämlich das bogenförmige Schneidwerkzeug 300, linear verlagerbar auf einem Führungszylinder 50 vorgesehen. Das bogenförmige Schneidwerkzeug 300 kann den Führungszylinder 50 kontaktieren. Jedenfalls ist es dazu vorgesehen, den Führungszylinder 50 zu umgreifen. Vorliegend ist an der Bearbeitungsvorrichtung 10 eine Schneidwerkzeugteilträger 302 vorgesehen, der ringförmig ausgebildet ist und den Führungszylinder 50 ebenfalls umgreift. Das bogenförmige Schneidwerkzeug ist lösbar an dem Schneidwerkzeugteilträger 302 angebracht. Der Schneidwerkzeugteilträger 302 ist mit einer Linearführung 304 gekoppelt, die dazu eingerichtet ist, den Schneidwerkzeugteilträger 302 und das damit gekoppelte bogenförmige Schneidwerkzeug 300 linear auf dem Führungszylinder 50 entlang der Querrichtung Q zu verlagern.

Details dieser Maschine erkennt man auch in der Darstellung gemäß Figur 2, in der die in Figur 1 vordere seitliche Wange 20 weggeschnitten ist, um einen besseren Einblick in die Maschine zu erhalten. Man erkennt, dass eine Reihe von Führungsrollen 52, 54, 56, 58, 60, 62, 64 zum Führen, Positionieren, Spannen und Verlagern des Flachmaterials FM in der Basis 12 bzw. an den seitlichen Wangen 20, 22 gelagert sind. Das Portal trägt die Stanzeinheit 34, wobei diese einen Bearbeitungskopf 68 und eine Matrizeneinheit 72 aufweist. Auch auf deren Funktionsweise wird noch im Detail eingegangen. Zur Führung der Matrizeneinheit 72 ist eine weitere Linearführung 74 vorgesehen. Dadurch lassen sich der Bearbeitungskopf 68 und die Matrizeneinheit 72 synchron in Querrichtung Q entlang des Portals 24 und der weiteren Führungseinheit 70 verlagern.

Ergänzend sei angemerkt, dass das Portal 24 zweiteilig ausgebildet ist. Es weist einen oberen Abschnitt 76 bzw. Träger und einen unteren Abschnitt 78 bzw. Träger auf, die durch einen Führungsspalt 79 voneinander getrennt sind. Durch den Führungsspalt 79 wird das Flachmaterial FM hindurchgeführt. Zum Führen des unteren Abschnitts 78 in der Vorschubrichtung V kann dieser mit der Linearführung 30 oder einer weiteren, unterhalb und parallel zu der Linearführung 30 an der Bearbeitungsvorrichtung 10 ausgebildeten Linearführung gekoppelt sein.

Figur 3 zeigt eine räumliche Darstellung eines erfindungsgemäßen bogenförmigen Schneidwerkzeugteils 306, wohingegen Figur 4 eine Schnittansicht des bogenförmigen Schneidwerkzeugseils 306 zeigt. Das bogenförmige Schneidwerkzeugteil 306 umfasst einen radial außenliegenden Schneidenbereich 308 mit einer ersten bogenförmigen Schneide 310. Die erste bogenförmigen Schneide 310 ist an der Kante des Schneidwerkzeugteils 306 ausgebildet, an der der radial außenliegende Schneidenbereich 308 in einen flächigen, planaren Seitenbereich 312 übergeht. Analog zu dem flächigen Seitenbereich 312 ist auch an der Rückseite des bogenförmigen Schneidwerkzeugteils 306 ein weiterer flächiger, planarer Seitenbereich 314 ausgebildet, der vorliegend nicht gezeigt ist. Vorliegend sind die flächigen Seitenbereiche 312, 314 parallel zueinander ausgerichtet, gleichartig und eben ausgebildet. Wie vorliegend kann vorgesehen sein, dass der radial außenliegende Schneidenbereich 308 zumindest eine weitere Schneide, nämlich die zweite Schneide 316 umfasst, die sich an der Kante erstreckt, an der der radial außenliegende Schneidenbereich 308 in den flächigen, planaren Seitenbereich 314 übergeht. Der radial außenliegende Schneidenbereich 308 mitsamt zumindest der ersten Schneide 310 erstreckt sich über einen Winkel von im Wesentlichen 180° des bogenförmigen Schneidwerkzeugteils 306. Damit erstreckt sich die erste Schneide 310 in Umfangsrichtung über den gesamten radial außenliegenden Schneidenbereich 308. Der radial außenliegende Schneidenbereich 308 ist gemäß einer Kreissegmentform, vorliegend gemäß einer Halbkreissegmentform, ausgebildet.

Das bogenförmige Schneidwerkzeugteil 306 umfasst ferner einen innenliegenden Abschnitt 318, der dazu vorgesehen ist, den Führungszylinder 50 der Bearbeitungsvorrichtung 10 teilweise zu umgreifen. Es kann vorgesehen sein, dass der innenliegende Abschnitt 318 den Führungszylinder 50 kontaktiert oder beabstandet zu diesem bei Anbringung an der Bearbeitungsvorrichtung 10 angeordnet ist. Der innenliegende Abschnitt 318 ist radial innenliegend zu dem radial außenliegenden Schneidenbereich 308 angeordnet und gemäß der Bogenform ausgebildet. Sowohl der radial außenliegende Schneidenbereich 308 als auch der innenliegende Abschnitt 318 sind insoweit planare ausgebildet, als dass sie gemäß eines Teils einer Zylindermantelfläche ausgebildet sind.

Das bogenförmige Schneidwerkzeugteil 306 umfasst außerdem eine erste Kopplungsanordnung 320 mit einem ersten Kopplungsabschnitt 322 und eine zweite Kopplungsanordnung 324 mit einem zweiten Kopplungsabschnitt 326. Die beiden Kopplungsanordnungen 320, 324 sind derart ausgebildet, dass ein imaginäres Koppeln mit der jeweils anderen Kopplungsanordnung möglich ist. Wäre ein zweites, gleichartiges bogenförmiges Schneidwerkzeugteil vorgesehen, so wäre dies in einer um 180° um die Mittelachse M gedrehten Ausrichtung mit den Kopplungsabschnitten 320, 324 koppelbar. Unter den Kopplungsabschnitten 322, 326 kann die jeweilige Stirnfläche bzw. Stirnflächenkontur in Umfangsrichtung der Bogenform verstanden werden.

Der erste Kopplungsabschnitt 322 umfasst einen rechteckförmigen Vorsprung 325, der sich in radialer Richtung R des ersten Kopplungsabschnitts 322 vollständig über diesen erstreckt, jedoch in der Tiefenrichtung T mittig auf dem ersten Kopplungsabschnitt 322 angeordnet ist. So sind neben dem Vorsprung 325 in Richtung des Seitenbereichs 312 eine erste abgesetzte Fläche 327 und in Richtung des Seitenbereichs 314 eine zweite abgesetzte Fläche 328 ausgebildet, die im Wesentlichen gleich groß zueinander und ebenfalls rechteckförmig ausgebildet sind. Es versteht sich, dass die radiale Richtung R wie in Figur 3 gezeigt verstanden werden kann, jedoch auch Richtungen ausgehend von dem Mittelpunkt M0 in Richtung des bogenförmigen Schneidwerkzeugteils (siehe Figur 4) oder mehrere, entlang einer Geraden angeordnete Mittelpunkte, in Richtung des bogenförmigen Schneidwerkzeugteils umfassen kann.

Der zweite Kopplungsabschnitt 326 umfasst eine Nut 330, die sich in radialer Richtung R des zweiten Kopplungsabschnitt 326 vollständig über diesen erstreckt, jedoch in der Tiefenrichtung T mittig auf dem zweiten Kopplungsabschnitt 326 angeordnet ist. So sind neben der Nut 330 in Richtung des Seitenbereichs 312 eine erste hervorgesetzte Fläche 332 und in Richtung des Seitenbereichs eine zweite hervorgesetzte Fläche 334 ausgebildet, die im Wesentlichen gleich groß zueinander und ebenfalls rechteckförmig ausgebildet sind.

Die erste Kopplungsanordnung 320 umfasst ein erstes Loch 336, dessen Mittelachse M1 sich im Wesentlichen senkrecht zu der Ebene des ersten Kopplungsabschnitts 322 erstreckt, insbesondere senkrecht zu der Ebene erstreckt, die der Vorsprung 325 aufspannt. Das erste Loch 336 ist als Sackloch ausgebildet und umfasst ein Innengewinde.

Die zweite Kopplungsanordnung 324 umfasst ein zweites Loch 338, dessen Mittelachse M2 sich im Wesentlichen senkrecht zu der Ebene des zweiten Kopplungsabschnitts 326 erstreckt, insbesondere senkrecht zu der Ebene erstreckt, die die Nut 330 aufspannt. Das zweite Loch 338 ist als Durchgangsloch ausgebildet. Wie insbesondere aus Figur 4 hervorgeht, umfasst das Loch 338 einen ersten Lochabschnitt 340 mit einem ersten Durchmesser und einen zweiten Lochabschnitt 342 mit einem zweiten Durchmesser, wobei der erste Durchmesser kleiner als der zweite Durchmesser ist. Der erste Lochabschnitt 340 dient dazu, einen Schraubenschaft aufzunehmen, und der zweite Lochabschnitt 342 dient dazu, einen Schraubenkopf aufzunehmen.

Das bogenförmige Schneidwerkzeugteil 306 weist eine Symmetrieebene auf. Die Symmetrieebene wird durch die radiale Richtung R bei Umlauf um den Mittelpunkt M0 aufgespannt und ist in der tiefen Richtung T mittig des bogenförmigen Schneidwerkzeugteils 306 angeordnet. Dementsprechend liegen die Mittelachse M1 und M2 in der Symmetrieebene.

Das bogenförmige Schneidwerkzeugteil 306 umfasst ferner eine Anbringanordnung 344 an dem Schneidwerkzeugteilträger 302. Dazu umfasst die Anbringanordnung 344 eine Mehrzahl an Befestigungslöchern 346, die an dem bogenförmigen Schneidwerkzeugteil 306 ausgebildet sind und die sich ausgehend von dem Seitenbereich 312 vollständig durch das bogenförmige Schneidwerkzeugteil 306 bis zu dem Seitenbereich 314 erstrecken.

Vorliegend sind die Befestigungslöcher 346 auf einem Teil-Lochkreis um den Mittelpunkt M0 und in Umfangsrichtung gleichmäßig zueinander beabstandet angeordnet. In radialer Richtung sind die Befestigungslöcher 346 näher zu dem innenliegenden Abschnitt 318 als zu dem radial außenliegenden Schneidenbereich 308 angeordnet. Dabei sind die Befestigungslöcher 346 auf etwa bei einem Drittel der Dicke des bogenförmigen Schneidwerkzeugsteils 306 in radialer Richtung R angeordnet.

Da die Löcher 336, 338 unterschiedlich ausgebildet sind, kann wie vorliegend vorgesehen sein, dass die in Umfangsrichtung außenliegenden der Befestigungslöcher 346 zu dem jeweilig nächstliegenden Kopplungsabschnitt 322, 326 unterschiedlich beabstandet sind. In Umfangsrichtung ist das zum Loch 336 nächstliegende Befestigungsloch 346 näher zu dem Loch 336 angeordnet als das in Umfangsrichtung zum Loch 338 nächstliegende Befestigungsloch 346. Im Speziellen ist in Umfangsrichtung das zum Loch 336 nächstliegende Befestigungsloch 346 zu dem Loch 336 in einem Winkel w1 von weniger als 30°, bevorzugt etwa 18°, um die den Mittelpunkt M0 versetzt angeordnet, wobei das in Umfangsrichtung zum Loch 338 nächstliegende Befestigungsloch 346 zu dem Loch 338 in einem Winkel von etwa 27° angeordnet, wobei die Winkel auch anders gewählt sein könnten.

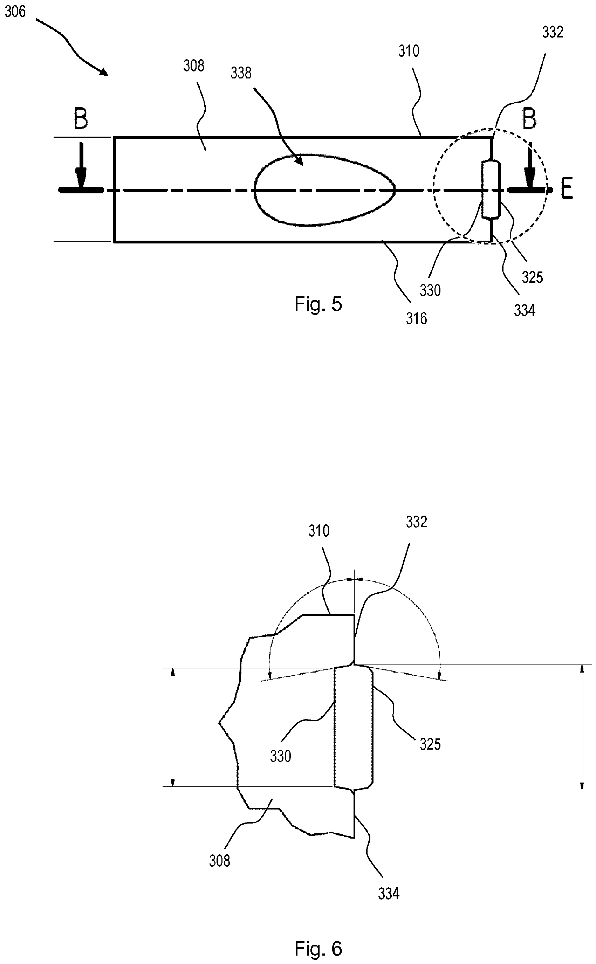

Figur 5 zeigt eine Ansicht des erfindungsgemäßen bogenförmigen Schneidwerkzeugteils 306 aus Figur 3, jedoch in einer Ansicht von unten. Es ist erkennbar, dass das Loch 338 aufgrund der bogenförmigen Ausgestaltung des radial außenliegenden Schneidenbereichs 308 bei Ansicht von unten eine ovale, ja sogar eiförmige, Aussparung bildet.

Wie auch in Figur 6, die eine Detailansicht E wie in Figur 5 angedeutet des erfindungsgemäßen bogenförmigen Schneidwerkzeugs zeigt, sind in Figur 5 ferner die erste hervorgesetzte Fläche 332, die zweite hervorgesetzte Fläche 334 und die Nut 330 des zweiten Kontaktabschnitts 326 erkennbar. Es wird deutlich, dass die hervorgesetzten Flächen 332, 334 gegenüber der Nut 330 geringfügig hervorgesetzt und zueinander parallel ausgerichtet sind. Ferner ist der Vorsprung 325 des ersten Kopplungsabschnitts 322 erkennbar, während die abgesetzten Flächen 327, 328 von den hervorgesetzten Flächen 332, 334 verdeckt sind. Es versteht sich, dass die abgesetzten Flächen 327, 328 parallel zu den hervorgesetzten Flächen 332, 334 angeordnet sind. Ferner ist erkennbar, dass der Vorsprung 325 im Wesentlichen komplementär zu der Nut 330 ausgebildet ist.

Insbesondere aus Figur 6 geht hervor, dass die Nut 330 nach innen trapezförmig verjüngend ausgebildet ist. Ferner ist der Vorsprung 325 nach außen trapezförmig verjüngend ausgebildet. Für die Verjüngung kann wie vorliegend ein Winkel von im Wesentlichen 10° gegenüber den hervorgesetzten Flächen 332, 334 bzw. den abgesetzten Flächen 327, 328 vorgesehen sein, wobei auch andere Winkel vorgesehen sein können.

Ferner ist in Figur 5 die Schnittebene B-B dargestellt, die die Symmetrieebene darstellt und auf der die Darstellung gemäß Figur 4 basiert.

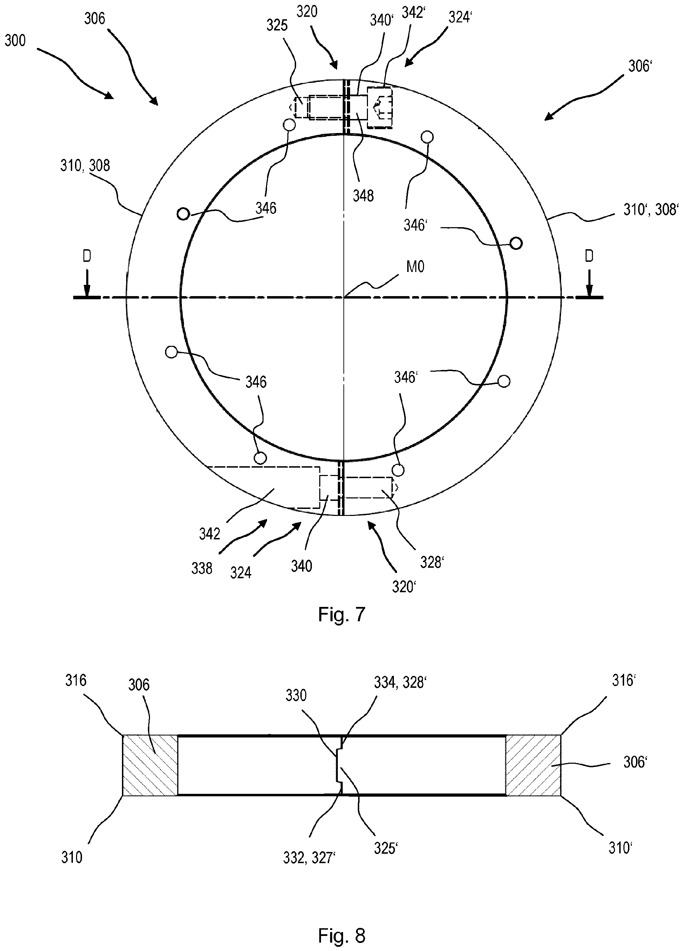

Figur 7 zeigt eine Darstellung eines erfindungsgemäßen bogenförmigen Schneidwerkzeugs 300. Figur 8 zeigt eine Schnittansicht des erfindungsgemäßen bogenförmigen Schneidwerkzeugs 300 entlang der Linie D-D in Figur 8. Das bogenförmige Schneidwerkzeug 300 umfasst das Schneidwerkzeugteil 306, das im Folgenden als erstes Schneidwerkzeugteil 306 bezeichnet wird, und ein zweites Schneidwerkzeugteil 306'. Die zweite Schneidwerkzeugteil 306' stimmt mit dem ersten Schneidwerkzeugteil 306 überein, ist jedoch um 180° gedreht angeordnet, und zwar um die Ebene D-D. Anders ausgedrückt könnte man sagen, dass das zweite Schneidwerkzeugteil 306' eine Spiegelung des ersten Schneidwerkzeugteils 306 um den Mittelpunkt M0 bildet.

Es ist nicht notwendig, dass die beiden Schneidwerkzeugteile 306, 306' identisch ausgebildet ist. Es reicht aus, dass die erste Kopplungsanordnung 320' des zweiten Schneidwerkzeugteils 306' mit der ersten oder der zweiten Kopplungsanordnung 320, 324 des ersten Schneidwerkzeugteils 306 koppelbar ist, und die zweite Kopplungsanordnung 324' des zweiten Schneidwerkzeugteils 306' mit der anderen von der ersten und der zweiten Kopplungsanordnung 320, 324 des ersten Schneidwerkzeugteils 306 gekoppelt ist.

Vorliegend kontaktiert der erste Kopplungsabschnitt 322 des ersten Schneidwerkzeugteil 306 den zweiten Kopplungsabschnitt 326' des zweiten Schneidwerkzeugteils 306'. Ferner kontaktiert der zweite Kopplungsabschnitt 326 des ersten Schneidwerkzeugteils 306 den ersten Kopplungsabschnitt 322' des zweiten Schneidwerkzeugteils 306'. Wie insbesondere aus Figur 8 hervorgeht, ragt dazu der Vorsprung 325' des zweiten Schneidwerkzeugteils 306' in die Nut 330 des ersten Schneidwerkzeugteils 306. Wie Figur 7 zeigt, ragt analog dazu der Vorsprung 325 des ersten Schneidwerkzeugteils 306 in die Nut 330' des zweiten Schneidwerkzeugteils 306'.

Das Kontaktieren der Kopplungsabschnitte 322 und 326' bzw. der Kopplungsabschnitte 322' und 326 verhindert aufgrund der Konturen derselben eine relative Verlagerung der Schneidwerkzeugteile 306, 306' in der Tiefenrichtung der Figur 7. Ferner bewirkt die jeweilige trapezförmige Verjüngung der Nuten 330, 330' und der Vorsprünge 325, 325' eine exakte Positionierung der Schneidwerkzeugteile 306, 306', sodass die Schneiden 310, 310' zueinander in Umfangsrichtung fluchtend ausgerichtet sind. Damit können die Schneiden 310, 310' zu einer einzigen imaginären Schneide zusammengesetzt werden.

Wie insbesondere aus Figur 8 hervorgeht, kontaktieren die zweite hervorgesetzte Fläche 334 des ersten Schneidwerkzeugteils 306 und die zweite abgesetzte Fläche 328' des zweiten Schneidwerkzeugteils 306'. Entsprechend kontaktieren die erste hervorgesetzte Fläche 332 des ersten Schneidwerkzeugteils 306 und die erste abgesetzte Fläche 327' des zweiten Schneidwerkzeugteils 306'. Für beide Schneidwerkzeugteile 306, 306' sind die Schneiden 310, 316, 310', 316' zumindest geschnitten dargestellt. Die Schneiden 310, 310' bilden eine gemeinsame, vollständige und kreisförmige Schneide. Die Schneiden 316, 316' bilden ebenfalls eine gemeinsame, vollständige und kreisförmige Schneide. Es kann genügen, dass lediglich eine der vollständigen Schneiden vorliegt bzw. dass an jedem der Schneidwerkzeugteile lediglich eine der Schneiden 310, 316 bzw. 310`, 316' ausgebildet ist.

Das bogenförmige Schneidwerkzeug 300 umfasst ferner zwei Verbindungsmittel, wobei vorliegend lediglich ein Verbindungsmittel 348, nämlich eine Schraube, dargestellt ist. Die Schraube ist in den Löchern 338' und 336 angeordnet. Dabei ist die Schraube in das Gewinde des Lochs 336 eingeschraubt und verspannt die erste Kopplungsanordnung 320 des ersten Schneidwerkzeugteils 306 mit der zweiten Kopplungsanordnung 324 des zweiten Schneidwerkzeugteils 306'. Analog dazu könnte auch eine zweite Schraube vorgesehen sein, die in den Löchern 338 und 336' angeordnet ist und die zweite Kopplungsanordnung 324 des ersten Schneidwerkzeugteils 306 mit der ersten Kopplungsanordnung 320' des zweiten Schneidwerkzeugteils 306' koppelt bzw. verspannt. Die Schraube kann als Rundkopfschraube beispielsweise mit Innensechskantprofil ausgebildet sein.

Wie insbesondere aus Figur 7 hervorgeht, sind die Löcher 336, 338 bzw. 336', 338' des bogenförmigen Schneidwerkzeugteils 306 bzw. 306' derart angeordnet, dass das Verbindungsmittel 348 im an den Schneidwerkzeugteilen 306 bzw. 306' angebrachten Zustand vollständig innerhalb der Schneidwerkzeugteil, also in einem Bereich zwischen dem radial außenliegenden Schneidenbereich 308, 308' und dem innenliegenden Abschnitt 318, 318', angeordnet. Anders ausgedrückt ragt das Verbindungsmittel 348 weder in den radial außenliegenden Schneidenbereich 308, 308' noch in den innenliegenden Abschnitt 318, 318'. Damit wird eine besonders kompakte Bauform erreicht, bei der das Verbindungmittel 348 nicht die Schneiden 310, 316 bzw. die Schneidfunktion des Schneidwerkzeugs beeinträchtigt. Gleichzeitig kann das Schneidwerkzeug 300 dennoch leicht von dem Führungszylinder 50 bzw. dem Schneidwerkzeugteilträger 302 zum Tauschen des Schneidwerkzeugs 300 demontiert werden.

Es ist erkennbar, dass das bogenförmige Schneidwerkzeug 300 im montierten Zustand eine kreisringförmige Querschnittskontur aufweist. Wie insbesondere aus den Figuren 3 und 4 hervorgeht, weist das Schneidwerkzeugteil 306 eine Kontur gemäß einer Halbkreisringform auf.

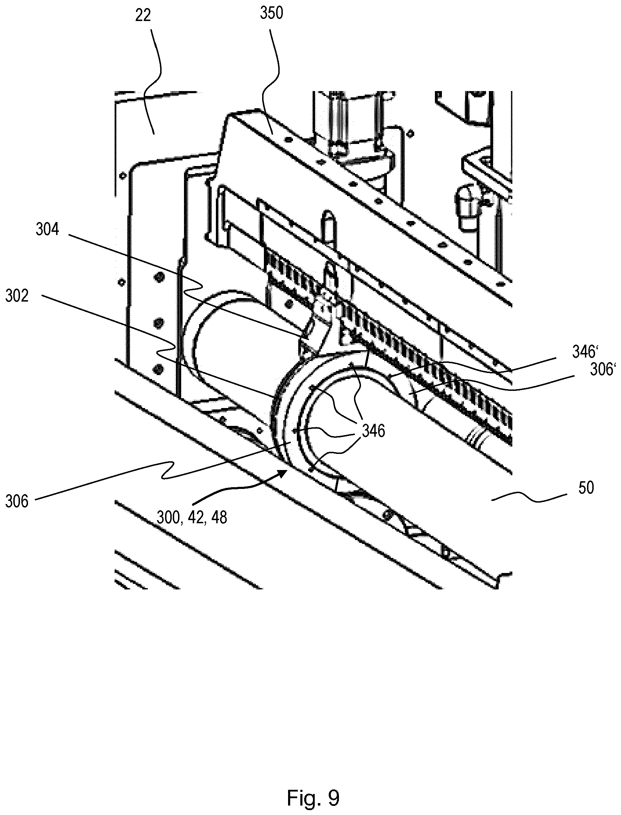

Figur 9 betrifft eine Detaildarstellung der Figur 1. Das Schneidwerkzeugteil 300 ist an dem Schneidwerkzeugteilträger 302 mittels nicht naher dargestellter Schrauben, die in den Befestigungslöchern 346 und 346' der Schneidwerkzeugteile 306 und 306' angeordnet sind, angebracht. Der Schneidwerkzeugteilträger 302 kann ringförmig ausgebildet sein und den Führungszylinder 50 umgreifen. Ist der Führungszylinders 50 auf eine andere Weise ausgebildet, kann die Form des Schneidwerkzeugteilträgers 302 entsprechend variieren. Wir bei der Bearbeitungsvorrichtung 10 vollständig auf den Führungszylinder 50 verzichtet, könnte der Schneidwerkzeugteilträger 302 beispielsweise auch eine kreisscheibenform oder andere Form aufweisen. Der Schneidwerkzeugteilträger 302 könnte fest und/oder lösbar mit der Linearführung 304 gekoppelt sein. Es versteht sich, dass falls die auf das Schneidwerkzeug 300 bei einem Schneidvorgang ausgeübte Kraft nicht auf den Führungszylinder 50, sondern vollständig oder zumindest teilweise auf die Linearführung 304 übertragen wird, die Linearführung 304 entsprechend stabil ausgebildet sein muss. Die Linearführung 304 ist in Querrichtung Q linear verlagerbar an der Führungsstrebe 350 angebracht, die sich zwischen den beiden seitlichen Wangen 20, 22 in der Querrichtung Q erstreckt. Die Linearführung 304 ist motorisch antreibbar ausgeführt. Die Linearführung kann in Querrichtung Q an verschiedenen Positionen entlang des Führungszylinders 50 angeordnet werden, um das Flachmaterial FM in der Vortriebsrichtung V zu schneiden.

Ein besonderer Vorteil der erfindungsgemäßen Schneidwerkzeugteile 306, 306' bzw. des erfindungsgemäßen Schneidwerkzeugteils 300 liegt in der besonders einfachen Austauschbarkeit in der Bearbeitungsvorrichtung 10. Soll das Schneidwerkzeugteil 300 ausgetauscht werden, beispielsweise weil es verschlissen ist oder stattdessen ein Variante des Schneidwerkzeugs eingebaut werden soll, so kann dies einfach realisiert werden, ohne dass ein aufwändiges Ausbauen von Teilen der Bearbeitungsvorrichtung 10 notwendig wäre. Vorliegend wären für einen Austausch zunächst die Schrauben in den Befestigungslöchern 346 zu lösen. Anschließend ist das Schneidwerkzeug 300 auf dem Führungszylinder 50 in der Querrichtung Q verlagerbar. Bei aus dem Stand der Technik bekannten Schneidwerkzeugen wäre nun ein Ausbau des Führungszylinders 50 nötig, was sehr aufwändig ist. Dank der vorliegenden Erfindung, insbesondere dank des Unterteilens des bogenförmigen Schneidwerkzeugs 300 in zwei oder mehr bogenförmige Schneidwerkzeugteile 306, 306', ist dieser Arbeitsschritt nicht nötig. Es müssen lediglich die beiden Verbindungsmittel 348 gelöst werden, sodass die beiden Schneidwerkzeugteile 306, 306' voneinander getrennt und anschließend aus der Bearbeitungsvorrichtung 10 herausgenommen werden können. Ein Einbau des gleichen oder einer Variante des Schneidwerkzeugs 300 erfolgt in umgekehrter Reihenfolge der genannten Schritte.

Im Folgenden werden insbesondere Merkmale der Bearbeitungsvorrichtung 10 im Zusammenhang mit der Trennbearbeitungseinheit 34 bzw. der Stanzeinheit 34 näher erläutert. Es sei jedoch angemerkt, dass die Trennbearbeitungseinheit 34 bzw. der Stanzeinheit 34 und damit in Zusammenhang stehende Merkmale optionale Merkmale der Bearbeitungsvorrichtung 10 betreffen. Auch betreffen das Stanzwerkzeug 40 bzw. das Messer 44 und damit in Zusammenhang stehende Merkmale optionale Merkmale der Bearbeitungsvorrichtung 10. Es kann für eine erfindungsgemäße Bearbeitungsvorrichtung 10 genügen, dass diese
- die Basis 12 mit einem Auflagertisch für das Flachmaterial umfasst, wobei die Basis eine Vorschubrichtung V definiert, in der das Flachmaterial FM der Bearbeitungsvorrichtung zuführbar ist, und
- eine Schneidvorrichtungsanordnung 40, 42 umfasst, die dazu ausgebildet ist, das Flachmaterial FM zu schneiden,
wobei die Schneidvorrichtungsanordnung 40; 42 zumindest ein Schneidwerkzeugteil 306 gemäß der vorangehenden Art und/oder eine Schneidwerkzeug 300 gemäß der vorangehenden Art aufweist.

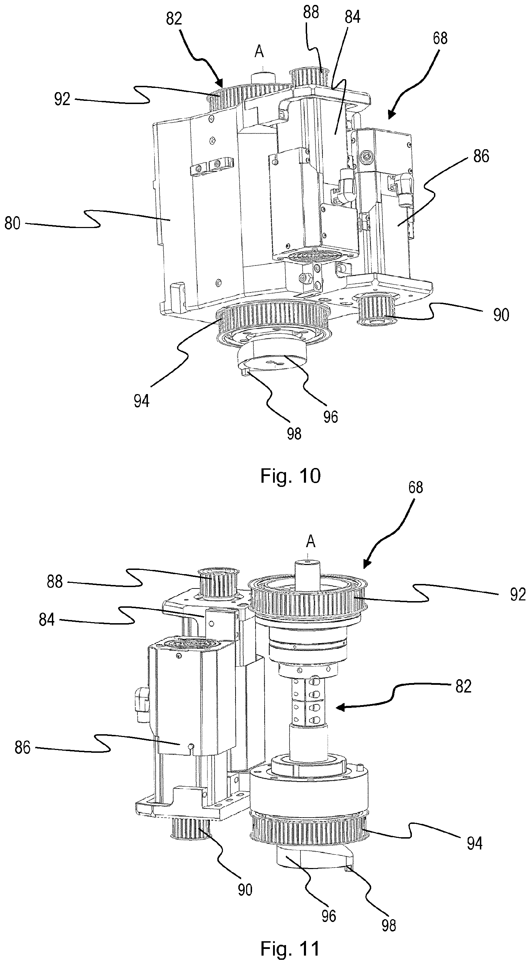

In Figur 10 erkennt man nun eine räumliche Darstellung eines oberen Teils des Bearbeitungskopfes 68. Dieser umfasst ein Gehäuse 80, in dem ein Doppelspindeltrieb 82 mit gegenläufig orientierten Antriebsspindeln untergebracht ist. In Figur 11 erkennt man wiederum den oberen Teil des Bearbeitungskopfes 68, jedoch gezeigt aus einer anderen Perspektive, wobei ein Teil des Gehäuses 80 weggelassen wurde. Der Bearbeitungskopf 68 weist neben dem Doppelspindeltrieb 82 zwei Antriebsmotoren 84, 86 auf. Diese beiden Antriebsmotoren sind jeweils mit einem Ausgangszahnrad 88, 90 versehen, von denen jedes jeweils über einen nicht gezeigten Zahnriemen entsprechende Antriebszahnräder 92, 94 des Doppelspindeltriebs 82 antreiben kann. Ferner erkennt man in Figuren 10 und 11 ein Kraftausgangselement 96, das eine exzentrisch vorspringende Nase 98 aufweist. Zur weiteren Erläuterung wird ferner darauf hingewiesen, dass der Doppelspindeltrieb 82 eine Drehachse A aufweist.

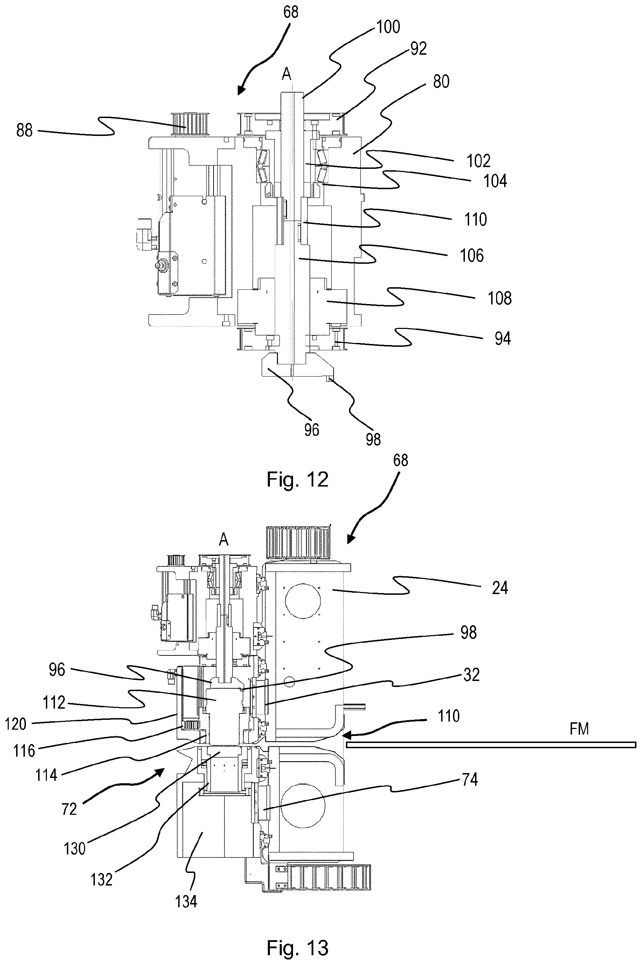

Figur 12 zeigt einen achsenthaltenden Schnitt des Bearbeitungskopfes 68 entlang der Achse A. Darin erkennt man das Kraftausgangselement 96 mit der vorspringende Nase 98. Eine erste Spindel 100 ist in einer ersten Spindelhülse 102 aufgenommen. Die Spindelhülse 102 wird über das Ausgangszahnrad 88 und das Antriebszahnrad 92 drehangetrieben. Sie ist über eine Lageranordnung 104 in dem Gehäuse 80 drehbar um die Achse A gelagert. Eine zweite Spindel 106 ist in einer zweiten Spindelhülse 108 aufgenommen. Die Spindelhülse 108 wird über das hier nicht gezeigte Ausgangszahnrad 90 und das Antriebszahnrad 94 drehangetrieben. Die Spindeln sind über ein Kopplungsteil 110 miteinander gekoppelt. Die Funktionsweise ist an sich aus dem Stand der Technik bekannt, beispielsweise aus dem Dokument EP 1 748 853 B1. Die beiden Antriebsmotoren 84, 86 sind derart ansteuerbar, dass sie die beiden Antriebszahnräder 92, 94 gegenläufig oder gleichläufig orientiert, d. h. in gegenläufigem oder in gleichem Drehsinn, antreiben können. Drehen beide Spindelhülsen 102 und 108 gleichläufig, kommt es lediglich zu einer Drehbewegung des Kraftausgangselements 96 und damit zu einer Verdrehung der Nase 98 um die Achse A, sodass sich die exzentrisch vorspringende Nase 98 in ihrer Winkelstellung um die Drehachse A verändert. Drehen beide Spindelhülsen 102 und 108 gegenläufig, kommt es zu einer Hubbewegung der Spindel 106 und damit zu einer Hubbewegung das Kraftausgangselements 96 entlang der Achse A in Hubrichtung.

Figur 13 zeigt nun den Bearbeitungskopf 68 gekoppelt an das Portal 24 zusammen mit der Matrizeneinheit 72, die an der Linearführung 74 des unteren Teils des Portals 24 angebracht ist. Man erkennt, dass das Portal 24 in seinem oberen und unteren Bereich einen konisch zulaufenden Einlaufbereich 110 in Form eines Spaltes für das Flachmaterial FM definieren. Dieser gewährleistet, dass das Flachmaterial FM in vorbestimmter Ausrichtung in den Bereich geführt wird, in dem der Bearbeitungskopf 68 und die Matrizeneinheit 72 zusammenwirken. Man erkennt ferner, dass das Kraftausgangselement 96 des Bearbeitungskopfes 68 mit einer Stanzwerkzeugbaugruppe 112 gekoppelt ist. Die Stanzwerkzeugbaugruppe 112 ist in einem Baugruppenträger 114 fest fixiert aufgenommen, kann jedoch zum Zwecke der Wartung oder zum Auswechseln aus diesem entnommen werden. Der Baugruppenträger 114 ist über einen Drehantrieb 116 relativ zu einem Gehäuse 120 drehverlagerbar. Dies bedeutet, dass sich die Stanzwerkzeugbaugruppe 112 relativ zu dem Gehäuse 120 um die Achse A beliebig verdrehen lässt.

Ferner erkennt man in Figur 13 oben, dass die Stanzwerkzeugbaugruppe 112 mit der vorspringende Nase 98 das Kraftausgangselements 96 gekoppelt ist. Die Nase 98 greift in eine korrespondierende Ausnehmung an einem nicht näher gezeigten Hubkolben der Stanzwerkzeugbaugruppe 112 ein. Durch Verdrehen der Nase 98 des Kraftausgangselements 96 lässt sich der Hubkolben der Stanzwerkzeugbaugruppe 112 in dieser verdrehen. Wird das Kraftausgangselement 96 des Bearbeitungskopfes 34 jedoch in Richtung der Achse A verlagert, um eine Hubbewegung auszuführen, lässt sich der Hubkolben der Stanzwerkzeugbaugruppe 112 entsprechend zum Erzielen einer Hubbewegung eines einzelnen Stanzwerkzeugs ebenfalls in Achsrichtung verlagern. Dies wird im folgenden noch im Detail erläutert.

Ferner erkennt man in Figur 13 noch die Matrizeneinheit 72. Diese weist eine Matrizenplatte 130 auf, die in einem drehbaren Matrizenträger 132 aufgenommen ist. Der Matrizenträger 132 ist in einem Gehäuse 134 gelagert und über einen gesonderten Drehantrieb verdrehbar, der synchron mit dem Drehantrieb 116 gesteuert ist.

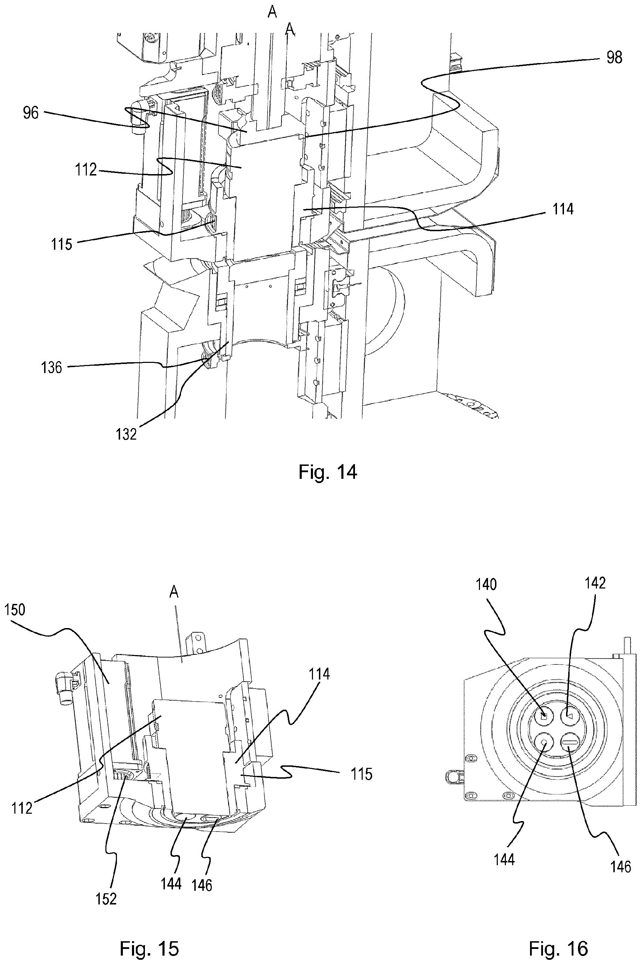

Figur 14 zeigt nochmals im Detail die Anordnung hinsichtlich der Kopplung des Kraftausgangselements 96 mit dem Stanzwerkzeug 112. Man erkennt, wie die Nase 98 in den nicht näher gezeigten Hubkolben der Stanzwerkzeugbaugruppe 112 eingreift. Ferner erkennt man in Figur 14, dass der Träger 114 für die Stanzwerkzeugbaugruppe 112 mit einer Außenverzahnung 115 versehen ist, über die er drehantreibbar ist. Darüber hinaus erkennt man in Figur 14, dass auch der Träger 132 mit einer Außenverzahnung 136 versehen ist, über die sich die Matrizenplatte 130 mit dem Träger 132 um die Achse A verlagern lässt.

Die Figuren 15 und 16 zeigen weitere Details hinsichtlich der Stanzwerkzeugbaugruppe 112. Insbesondere erkennt man in der Ansicht von unten gemäß Figur 16, dass das die Stanzwerkzeugbaugruppe 112 vier verschiedene Stanzwerkzeuge aufweist, nämlich ein im wesentlichen quadratisches Stanzwerkzeug 140, ein dreieckiges Stanzwerkzeug 142, ein kreisrundes Stanzwerkzeug 144, sowie ein längliches Stanzwerkzeug 146. In der perspektivischen Teilschnittansicht gemäß Figur 15 erkennt man lediglich die beiden Stanzwerkzeuge 144 und 146. Jedes dieser vier Stanzwerkzeuge lässt sich gezielt ansteuern, indem der Hubkolben der Stanzwerkzeugbaugruppe 112 über die Nase 98 das Kraftausgangselements 96 jeweils ausgerichtet zu dem auszuwählenden Stanzwerkzeug verdreht wird. Eine Hubbewegung des Kraftausgangselements 96 führt dann gezielt zu der Hubbewegung des ausgewählten Stanzwerkzeugs, beispielsweise des länglichen Stanzwerkzeugs 146, wobei in diesem Beispielsfall alle anderen Stanzwerkzeuge 140, 142, 144 dabei passiv bleiben.

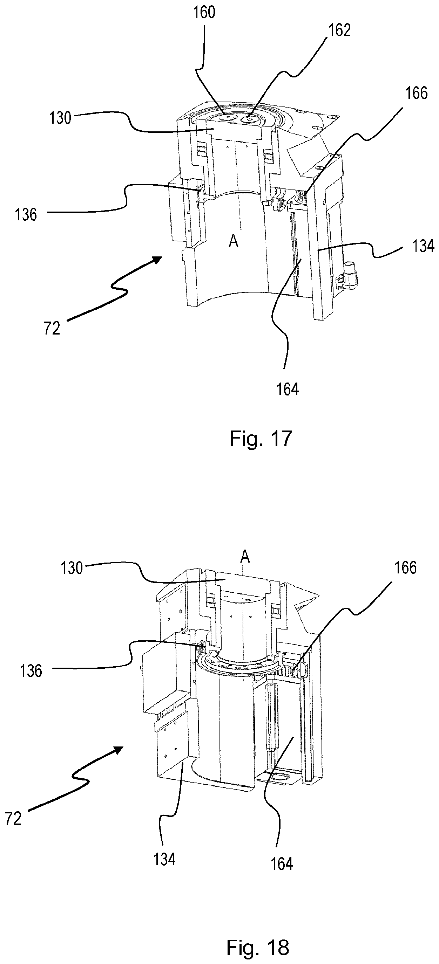

Ferner erkennt man in Figur 15 einen Antriebsmotor 150 mit einem Ausgangszahnrad 152, dass mit dem Antriebszahnrad 115 am Träger 114 für die Stanzwerkzeugbaugruppe 112 zusammen wirkt. Es ist demnach ein gesonderter Antrieb für das verdrehen der Stanzwerkzeugbaugruppe 112 vorgesehen, sodass das im Beispielsfall ausgewählte Stanzwerkzeug 146 relativ zur Achse A in beliebige Winkelstellung gebracht werden kann. Schließlich erkennt man noch in den Figuren 17 und 18 die Matrizeneinheit 72 mit der Matrizenplatte 130. Die Matrizenplatte 130 weist zu dem jeweiligen Profil der Stanzwerkzeuge 140, 142, 144 und 146 komplementäre Matrizenausnehmungen auf, von denen in Figur 17 lediglich zwei gezeigt sind, nämlich die beiden Matrizenausnehmungen 160, 162. Ferner erkennt man in Figuren 17 und 18 einen Antriebsmotor 164 mit einem Ausgangszahnrad 166, das über einen nicht gezeigten Zahnriemen dazu ausgebildet ist, das Antriebszahnrad 136 und damit den Matrizenträger 132 drehanzutreiben. Dadurch lassen sich die einzelnen Matrizenausnehmungen in der Matrizenplatte 130 ebenfalls in beliebige Winkelstellungen um die Achse A verdrehen. Es versteht sich, dass die Verdrehung der Matrizenplatte 130 synchron und ausgerichtet zu der Verdrehung der Stanzwerkzeugbaugruppe 130 erfolgt, um jeweils das ausgewählte Stanzwerkzeug 140, 142, 144 oder 146 korrekt ausgerichtet zur jeweiligen Ausnehmung in der Matrizenplatte 130 zu halten.

Mit der Erfindung lässt sich Flachmaterial FM sowohl in Querrichtung Q als auch in Vorschubrichtung V mittels der beiden Schneidvorrichtungen 40 und 42 zu schneiden. Ferner kann über den Bearbeitungskopf 68 und die ihm zugeordnete Matrizeneinheit 72 das Flachmaterial FM beliebig gestanzt und abschnittsweise geschnitten werden, indem beispielsweise das längliche Stanzwerkzeug 146 eingesetzt wird. Der Stanzvorgang kann dadurch unterstützt werden, dass sich das gesamte Portal 24 mit dem Bearbeitungskopf 68 und der ihm zugeordnete Matrizeneinheit 72 auch noch entlang der Linearführung 30 verlagern lässt. Dadurch lässt sich beispielsweise das Flachmaterial FM für einen bestimmten Bearbeitungsvorgang relativ zur Vorschubrichtung V in der Basis fixieren und dennoch ein Stanzvorgang in einem bestimmten Flächenbereich des Flachmaterials FM durchführen. Die Ausgestaltung des Bearbeitungskopf 68 in der gezeigten Ausführungsform mit einem Doppelspindeltrieb mit gegenläufigen Antriebsspindeln ermöglicht es, den Bearbeitungskopf 68 relativ autark auszugestalten. Er muss lediglich mit Strom versorgt und mit der Steuerung verbunden werden. Es sind beispielsweise keine Zuführleitungen für eine Hydraulik oder dergleichen erforderlich. Darüber hinaus ist der Bearbeitungskopf 68 robust ausgebildet. Die Verwendung einer Stanzwerkzeugbaugruppe 112 mit mehreren Stanzwerkzeugen bietet höhere Flexibilität und insbesondere erhebliche Vorteile gegenüber dem eingangs diskutierten Dokument EP 1 748 843 B1.

Insgesamt bietet die erfindungsgemäße Vorrichtung eine kompakte Maschine, die sowohl das Zuschneiden von Flachmaterial FM als auch das Durchführen von Stanzvorgängen miteinander vereint.

Die Erfindung betrifft auch die folgenden Aspekte:
1. Bearbeitungsvorrichtung (10) zum Schneiden und Stanzen von Flachmaterial (FM), wie beispielsweise Blech, umfassend:
   - eine Basis (12) mit einem Auflagertisch für das Flachmaterial (FM), wobei die Basis (12) eine Vorschubrichtung (V) definiert, in der das Flachmaterial (FM) die Bearbeitungsvorrichtung (10) zuführbar ist,
   - eine erste Schneidvorrichtung (40), die dazu ausgebildet ist, das Flachmaterial (FM) quer zur Vorschubrichtung (V) zu schneiden, und
      eine zweite Schneidvorrichtung (42), die dazu ausgebildet ist, das Flachmaterial (FM) in Vorschubrichtung (V) zu schneiden,
   wobei die Bearbeitungsvorrichtung (10) ferner eine Trennbearbeitungseinheit (34) aufweist, die in der Bearbeitungsvorrichtung (10) relativ zur Basis (12) quer zur Vorschubrichtung (V) verlagerbar ausgebildet ist, wobei die Trennbearbeitungseinheit (34) dazu ausgebildet ist, das Flachmaterial (FM) abschnittsweise einer Trennbearbeitung zu unterziehen.
2. Bearbeitungsvorrichtung (10) nach Aspekt 1, wobei an der Basis (12) ein Führungsportal vorgesehen ist, das quer zum Auflagertisch (14) angeordnet ist, wobei das Führungsportal (24) eine Führungsvorrichtung aufweist, mit der die Trennbearbeitungseinheit (34) relativ zur Basis (12) geführt verlagerbar ist, wobei insbesondere die Führungsvorrichtung eine Linearführung aufweist.
3. Bearbeitungsvorrichtung (10) nach Aspekt 2, wobei das Führungsportal (24) relativ zur Basis (12) in Vorschubrichtung (V) verlagerbar ausgebildet ist.
4. Bearbeitungsvorrichtung (10) nach Aspekt 3, wobei das Flachmaterial (FM) auf dem Auflagertisch (14) relativ zur Basis (12) in Vorschubrichtung (V) mittels einer Vorschubvorrichtung verlagerbar ist.
5. Bearbeitungsvorrichtung (10) nach einem der vorangehenden Aspekte, wobei die Basis (12) eine Fixiervorrichtung zum temporären Fixieren des Flachmaterials (FM) auf dem Auflagertisch (14) aufweist.
6. Bearbeitungsvorrichtung (10) nach einem der vorangehenden Aspekte, wobei die erste Schneidvorrichtung (40) eine Schlagscherenvorrichtung oder eine Rollenscherenvorrichtung aufweist.
7. Bearbeitungsvorrichtung (10) nach einem der vorangehenden Aspekte, wobei die zweite Schneidvorrichtung (42) eine Rundmesservorrichtung oder eine Rollenscherenvorrichtung aufweist.
8. Bearbeitungsvorrichtung (10) nach einem der vorangehenden Aspekte, wobei die Trennbearbeitungseinheit (34) mit einer Laserbearbeitungseinheit oder/und mit einer Stanzeinheit (34) ausgebildet ist.
9. Bearbeitungsvorrichtung (10) nach Aspekt 8, wobei die Stanzeinheit als hydraulische oder/und mechanische Stanzeinheit (34) ausgebildet ist.
10. Bearbeitungsvorrichtung (10) nach Aspekt 8 oder 9, wobei die Stanzeinheit (34) eine Mehrzahl von Stanzwerkzeugen (140, 142, 144, 176) aufweist, die wahlweise zum Bearbeiten des Flachmaterials (FM) auswählbar sind.
11. Bearbeitungsvorrichtung (10) nach Aspekt 10, wobei die mechanische Stanzeinheit (34) mit einer motorisch angetriebenen Doppel-Spindel-Anordnung (82) mit gegenläufigen Spindeltrieben und einer Antriebssteuerung ausgebildet ist, wobei das Kraftausgangselement (96) wahlweise in einer senkrecht zur Vorschubrichtung (V), insbesondere senkrecht zu einer Haupterstreckungsrichtung des Flachmaterials (FM), verlaufenden Hubrichtung verlagerbar oder/und relativ zu dieser verdrehbar ist.
12. Stanzeinheit (34) zum Stanzbearbeiten eines Flachmaterial (FM)s, insbesondere Bearbeitungskopf für eine Bearbeitungsvorrichtung (10) nach einem der vorangehenden Aspekte, wobei der Bearbeitungskopf umfasst:
   - ein Gehäuse, das eine Hubachse (A) definiert;
   - eine mechanische oder hydraulische Hubvorrichtung mit einem Kraftausgangselement (96);
   - eine in dem Gehäuse um eine Drehachse (A) drehbar gelagerte Werkzeugaufnahme (112) zum Aufnehmen wenigstens eines Schneid- oder Stanzwerkzeugs;
   - wenigstens ein in der Werkzeugaufnahme (112) aufnehmbares und in Richtung der Hubachse entlang einer Werkzeuglängsachse verlagerbares Schneid- oder Stanzwerkzeug (140, 142, 144, 146), wobei das Schneid- oder Stanzwerkzeug über das Kraftausgangselement (96) entlang seiner Werkzeuglängsachse verlagerbar ist;
   - eine Drehpositioniervorrichtung zum Drehpositionieren des wenigstens einen Schneid- oder Stanzwerkzeugs (150, 152, 115); und
   - eine Matrizeneinheit (72), die zur Wechselwirkung mit dem wenigstens einen Schneid- oder Stanzwerkzeug ausgebildet und nach Maßgabe seiner Drehpositionierung ausrichtbar ist.
13. Stanzeinheit (34) nach Aspekt 12, wobei die Drehpositioniervorrichtung dazu ausgebildet ist, das Schneid- oder Stanzwerkzeug (140, 142, 144, 146) um seine Werkzeuglängsachse und/oder um die Hubachse zu drehpositionieren.
14. Stanzeinheit (34) nach Aspekt 12 oder 13, wobei die Hubvorrichtung mit einem Hydraulikkolben ausgebildet ist, der das Kraftausgangselement in Hubvorrichtung um wenigstens eine vorbestimmten Hubstrecke verlagert.
15. Stanzeinheit (34) nach Aspekt 12 oder 13, wobei die Hubvorrichtung mit einer Spindelanordnung ausgebildet ist, insbesondere mit einer Doppelspindelanordnung (82), wobei die Doppelspindelanordnung mit einem ersten Spindeltrieb und einem zweiten Spindeltrieb versehen ist, wobei der erste und der zweite Spindeltrieb einander gegenläufig ausgebildete Antriebsspindeln aufweisen, wobei bei gleichorientiertem Drehantreiben des ersten und des zweiten Spindeltriebs das Kraftausgangselement um die Hubachse drehpositionierbar ist, wobei bei gegenläufig orientiertem Drehantreiben des ersten und des zweiten Spindeltriebs das Kraftausgangselement entlang der Hubachse in Hubrichtung verlagerbar ist.
16. Stanzeinheit (34) nach Aspekt 15, wobei die Werkzeugaufnahme einen Revolver mit einer Mehrzahl von darin aufgenommenen Schneid- oder Stanzwerkzeugen (140, 142, 144, 146) aufweist, wobei jedes der Schneid- oder Stanzwerkzeuge wahlweise zur Bearbeitung des Flachmaterials (FM) aktivierbar ist.
17. Stanzeinheit (34) nach Aspekt 16, wobei das Kraftausgangselement (96) ein relativ zur Hubachse exzentrisch angeordnetes und um die Hubachse wahlweise drehpositionierbares Koppelelement aufweist, wobei nach Maßgabe der Drehposition des Koppelelements um die Hubachse das jeweilige Schneid- oder Stanzwerkzeugs zur Bearbeitung des Flachmaterials (FM) aktivierbar ist, wobei nicht aktivierte Schneid- oder Stanzwerkzeuge passiv bleiben.
18. Stanzeinheit (34) nach Aspekt 16 oder 17, wobei der Werkzeugaufnahme (112) ein mit dem Kraftausgangselement koppelbarer Hubkolben zugeordnet ist, mit dem das jeweils aktivierte Schneid- oder Stanzwerkzeug (140, 142, 144, 146) entlang seiner Werkzeuglängsachse in Hubrichtung verlagerbar ist.
19. Stanzeinheit (34) nach einem der Aspekte 12 bis 18, wobei der Werkzeugaufnahme (140, 142, 144, 146) ein Drehantrieb (150) zugeordnet ist, mittels dem die Werkzeugaufnahme um die Hubachse relativ zu dem Gehäuse drehpositionierbar ist, wobei nach Maßgabe der Drehposition der Werkzeugaufnahme die Ausrichtung des wenigstens einen Schneid- oder Stanzwerkzeugs (140, 142, 144, 146) der Hubachse veränderbar ist.
20. Stanzeinheit (34) nach einem der Aspekte 12 bis 19, wobei der Matrizeneinheit (72) ein Drehantrieb zugeordnet ist, mittels dem eine das jeweils aktivierte Schneid- oder Stanzwerkzeug aufnehmende zum aktivierten Schneid- oder Stanzwerkzeug (140, 142, 144, 146) komplementäre Matrize (130) um die Hubachse relativ zu dem Gehäuse drehpositionierbar ist, wobei die Matrize nach Maßgabe der Ausrichtung und Positionierung aktivierten Schneid- oder Stanzwerkzeugs (140, 142, 144, 146) der Hubachse positionierbar ist.

## Patentansprüche

1. Bogenförmiges Schneidwerkzeugteil (306; 306') für eine Bearbeitungsvorrichtung (10) zum Schneiden von Flachmaterial (FM), wie beispielsweise Blech, umfassend:
einen radial außenliegenden Schneidenbereich (308) mit zumindest einer ersten bogenförmigen Schneide (310);
eine Anbringanordnung (344) zum Anbringen an der Bearbeitungsvorrichtung (10); und
eine erste Kopplungsanordnung (320) mit einem ersten Kopplungsabschnitt (322) und eine zweite Kopplungsanordnung (324) mit einem zweiten Kopplungsabschnitt (326);
wobei das bogenförmige Schneidwerkzeugteil (306; 306') eine Umfangsrichtung (U) gemäß der Bogenform definiert; und
wobei die erste und/oder die zweite Kopplungsanordnung (320, 324) zum lösbaren Koppeln in der Umfangsrichtung (U) mit zumindest einem weiteren, bogenförmigen Schneidwerkzeugteil (306; 306') ausgebildet ist.

2. Bogenförmiges Schneidwerkzeugteil (306; 306') gemäß Anspruch 1, wobei die erste und die zweite Kopplungsanordnung (320, 324) derart ausgebildet sind, dass ein imaginäres Koppeln mit der jeweils anderen von der ersten und der zweiten Kopplungsanordnung (320, 324) bereitgestellt ist.

3. Bogenförmiges Schneidwerkzeugteil (306; 306') gemäß Anspruch 1 oder 2, wobei der erste und der zweite Kopplungsabschnitt (322, 326) zueinander zumindest teilweise komplementär ausgebildet sind.

4. Bogenförmiges Schneidwerkzeugteil (306; 306') gemäß einem der vorangehenden Ansprüche, wobei der erste Kopplungsabschnitt (322) und/oder der zweite Kopplungsabschnitt (326) eine Nut (330, 330') und/oder einen Vorsprung (325, 325') aufweist, wobei bevorzugt die Nut (330, 330') zur Aufnahme des Vorsprungs (325, 325') ausgebildet ist.

5. Bogenförmiges Schneidwerkzeugteil (306; 306') gemäß einem der vorangehenden Ansprüche, wobei zumindest eine der Kopplungsanordnungen (320, 324) zumindest eine Aussparung zur Aufnahme eines Verbindungsmittels, insbesondere einer Schraube, aufweist.

6. Bogenförmiges Schneidwerkzeugteil (306; 306') gemäß einem der vorangehenden Ansprüche, ferner umfassend einen radial innenliegenden, insbesondere bogenförmigen, Abschnitt (318), der dazu vorgesehen ist, einen Teil der Bearbeitungsvorrichtung (10), insbesondere einen Führungszylinder (50), zumindest teilweise zu umgreifen.

7. Bogenförmiges Schneidwerkzeugteil (306; 306') gemäß einem der vorangehenden Ansprüche, wobei der radial außenliegende Schneidenbereich (308), insbesondere zumindest die erste Schneide (310), gemäß einer Kreissegmentform, ausgebildet ist.

8. Bogenförmiges Schneidwerkzeugteil (306; 306') gemäß einem der vorangehenden Ansprüche, wobei das Schneidwerkzeugteil (36; 306') ringsegmentförmig, insbesondere kreisringsegmentförmig, ausgebildet ist.

9. Bogenförmiges Schneidwerkzeugteil (306; 306') gemäß einem der vorangehenden Ansprüche, wobei das bogenförmige Schneidwerkzeugteil (306; 306') zumindest in radialer Richtung (R) eine im Wesentlichen konstante Dicke aufweist.

10. Bogenförmiges Schneidwerkzeugteil (306; 306') gemäß einem der vorangehenden Ansprüche, wobei die Anbringanordnung (344) zumindest ein Befestigungsloch (346), bevorzugt mehrere Befestigungslöcher (346), besonders bevorzugt mehrere entlang eines Lochkreises angeordnete Befestigungslöcher (346), zur zumindest teilweisen Aufnahme eines jeweiligen Verbindungsmittels, insbesondere jeweiliger Schrauben, zum Anbringen an der Bearbeitungsvorrichtung (10) aufweist.

11. Bogenförmiges Schneidwerkzeug (300), umfassend,
ein erstes Schneidwerkzeugteil (306) gemäß einem der Ansprüche 1 bis 10; und
ein zweites Schneidwerkzeugteil (306') gemäß einem der Ansprüche 1 bis 10;
wobei die erste Kopplungsanordnung (320) des zweiten Schneidwerkzeugteils (306') mit der ersten oder der zweiten Kopplungsanordnung (320, 324) des ersten Schneidwerkzeugteils (306) gekoppelt ist.

12. Bogenförmiges Schneidwerkzeug (300) gemäß Anspruch 11, wobei die zweite Kopplungsanordnung (324) des zweiten Schneidwerkzeugteils (306') mit der anderen von der ersten und der zweiten Kopplungsanordnung (320, 324) des ersten Schneidwerkzeugteils (306) gekoppelt ist.

13. Bogenförmiges Schneidwerkzeug (300) gemäß einem der Ansprüche 11 oder 12, ferner umfassend zumindest ein, bevorzugt zumindest zwei, Verbindungsmittel (348) zum lösbaren Koppeln des ersten Schneidwerkzeugteils (306) mit dem zweiten Schneidwerkzeugteil (306').

14. Bogenförmiges Schneidwerkzeug (300) gemäß einem der Ansprüche 11 oder 12, wobei die Schneidwerkzeugteile (306, 306') gleichartig ausgebildet sind.

15. Bearbeitungsvorrichtung (10) zum Schneiden von Flachmaterial (FM), wie beispielsweise Blech, umfassend:
- eine Basis (12) mit einem Auflagertisch für das Flachmaterial (FM), wobei die Basis (12) eine Vorschubrichtung (V) definiert, in der das Flachmaterial (FM) der Bearbeitungsvorrichtung (10) zuführbar ist, und
- eine Schneidvorrichtungsanordnung (40; 42), die dazu ausgebildet ist, das Flachmaterial (FM) zu schneiden,
**dadurch gekennzeichnet, dass** die Schneidvorrichtungsanordnung (40; 42) zumindest ein Schneidwerkzeugteil (306; 306') gemäß einem der Ansprüche 1 bis 11 und/oder ein Schneidwerkzeug (300) gemäß einem der Ansprüche 12 bis 14 zum Schneiden des Flachmaterials (FM) aufweist.

16. Bearbeitungsvorrichtung (10) gemäß Anspruch 15, **dadurch gekennzeichnet, dass** die Schneidvorrichtungsanordnung (40; 42)
- eine erste Schneidvorrichtung (40) umfasst, die dazu ausgebildet ist, das Flachmaterial (FM) quer zur Vorschubrichtung (V) zu schneiden, und/oder
- eine zweite Schneidvorrichtung (42) umfasst, die dazu ausgebildet ist, das Flachmaterial (FM) in Vorschubrichtung (V) zu schneiden,
wobei die erste Schneidvorrichtung (40) oder die zweite Schneidvorrichtung (42) das Schneidwerkzeugteil (306; 306') und/oder das Schneidwerkzeug (300) umfasst.
